# EUROPÄISCHE PATENTSCHRIFT

(11) **EP 3 089 826 B1**
(45) Veröffentlichungstag und Bekanntmachung des Hinweises auf die Patenterteilung: **24.02.2021**
(21) Anmeldenummer: 14825264.6
(22) Anmeldetag: 09.12.2014
(51) Int. Cl.: B05C 3/09, G02B 1/10

(54) **BESCHICHTUNGSVORRICHTUNG UND VERFAHREN ZUR TAUCHBESCHICHTUNG VON BRILLENGLÄSERN, VERFAHREN ZUM NACHDOSIEREN UND TAUCHBESCHICHTEN**
COATING APPARATUS AND METHOD FOR DIP-COATING SPECTACLE GLASSES, METHOD FOR ADDITIONALLY METERING AND DIP-COATING
DISPOSITIF DE REVÊTEMENT ET PROCÉDÉ DE REVÊTEMENT PAR TREMPAGE DE VERRES DE LUNETTES, ET PROCÉDÉ DE DOSAGE ULTÉRIEUR ET DE REVÊTEMENT PAR TREMPAGE

(30) Priorität: 23.12.2013 DE 102013022054
(43) Veröffentlichungstag der Anmeldung: 09.11.2016
(73) Patentinhaber: Rodenstock GmbH, 80687 München (DE)
(72) Erfinder: EBNER, Alexander, 94250 Achslach (DE); SCHÜTZ, Arthur, 94209 Regen (DE); SÜSS, Hubert, 94518 Spiegelau (DE)
(74) Vertreter: Müller-Boré & Partner Patentanwälte PartG mbB
(86) Internationale Anmeldenummer: PCT/EP2014/003290
(87) Internationale Veröffentlichungsnummer: WO 2015/096888

(56) Entgegenhaltungen:
- EP-A1- 0 492 773
- CH-A- 321 626
- DE-A1- 1 577 714
- US-A- 2 930 349
- US-B1- 6 740 163

## Beschreibung

Die vorliegende Erfindung betrifft eine Beschichtungsvorrichtung zur Tauchbeschichtung von Brillengläsern sowie ein Verfahren zum Nachdosieren von Lack und Lösemittel in eine Beschichtungsvorrichtung für eine Tauchbeschichtung von Brilengläsern und ein Verfahren zur Tauchbeschichtung von Brillengläsern.

In der Brillenglasherstellung werden die Brillengläser bzw. Brillenglasrohlinge üblicherweise mit Beschichtungen versehen, um den Oberflächen der Brillengläser gewünschte Eigenschaften zu verschaffen, wie zum Beispiel eine hohe Kratzfestigkeit. Hierbei kommen oft Hartlacke zum Einsatz. Zur Beschichtung der Brillengläser mit dem Lack werden die Brillengläser üblicherweise in ein Lackbecken getaucht, welches mit einem Lackgemisch aus Lack und Lösemittel gefüllt ist. Die durch den Beschichtungsvorgang und durch Verdampfung verlorengegangene Lack- und Lösemittelmenge wird ständig nachdosiert. Durch das Nachdosieren von Lack und Lösemittel kann es jedoch zu Inhomogenitäten, Ausfällungen und Lufteinschlussbildung kommen, welche sich als Schlieren, Verklumpungen oder anderen Beschichtungsfehlern auf dem Brillenglas bemerkbar machen. Zur Homogenisierung des Lackgemisches wird das Lackgemisch üblicherweise über einen Lackkreislauf ständig umgewälzt, außer während des Eintauchvorgangs. Durch den Lackkreislauf, insbesondere durch die Kupplungsstücke zwischen den Verbindungsleitungen, der Pumpe und dem Filter können zusätzlich Lufteinschlüsse ins Lackgemisch gelangen. Durch die Umwälzpumpe können Lufteinschlüsse zudem noch zerstäubt werden, was das Homogenisieren weiter erschwert.

US 2 930 349 A beschreibt eine Vorrichtung zum Beschichten von Gegenständen durch Eintauchen der Gegenstände in erhitzter Farbe. In dieser Vorrichtung wird die Farbe in einen Eintauchbehälter disponiert, wobei ein Ende davon niedriger ist als das andere. Die Farbe läuft konstant über von diesem niedrigeren Ende in ein Reservoir, welches Heizmittel für die Farbe beinhaltet. US 2930 349 A B1 offenbart eine Beschichtungsvorrichtung gemäß dem Oberbegriff der Ansprüche 1 und 10.

US 6 740 163 B1 beschreibt ein Verfahren und eine Vorrichtung zum Auftragen einer Abdeckschicht auf beide Seiten eines zweiseitigen Substrats.

Es ist daher Aufgabe der vorliegenden Erfindung, eine Beschichtungsvorrichtung und ein Verfahren bereitzustellen, mit denen ein möglichst homogenes Lackgemisch zur Tauchbeschichtung von Brillengläsern ohne Ausfällungen und Lufteinschlussbildung bereitgestellt werden kann.

Diese Aufgabe wird durch die Gegenstände der unabhängigen Ansprüche gelöst. Bevorzugte Ausführungsformen ergeben sich aus den abhängigen Ansprüchen.

Gemäß eines Aspekts der Erfindung wird eine Beschichtungsvorrichtung zur Tauchbeschichtung von Brillengläsern bereitgestellt, umfassend: ein Lackbecken zur Aufnahme eines Lackgemisches, eine an dem Lackbecken angeordnete Überlaufrinne zur Aufnahme des von dem Lackbecken überlaufenden Lackgemisches, und eine Lösemitteldosiervorrichtung, welche ausgelegt ist, Lösemittel direkt in die Überlaufrinne zu dosieren.

Mittels der erfindungsgemäßen Beschichtungsvorrichtung können Brillengläser bzw. Brillenglasrohlinge mit einem Lack, insbesondere einem Hartlack, beschichtet werden. Es können jedoch auch bereits beschichtete Brillengläser oder andere Objekte beschichtet werden. Übliche Beschichtungsdicken können zwischen etwa 1 µm und etwa 5 µm liegen, vorzugsweise bei etwa 3 µm.

Das Lackbecken ist geeignet, ein Lackgemisch aufzunehmen, und ist in seiner Ausgestaltung nicht besonders beschränkt. Vorzugsweise ist die Oberkante des Lackbeckens im Betriebszustand horizontal ausgerichtet. Das Lackbecken kann beispielsweise ein Volumen von zwischen etwa 5 Litern und 25 Litern aufweisen. Jedoch sind auch kleinere oder größere Lackbecken denkbar. Das Lackgemisch ist ein Gemisch umfassend Lack und Lösemittel.

Die Überlaufrinne ist vorzugsweise um das Lackbecken herum, insbesondere um die Oberkante des Lackbeckens herum, angeordnet.

Die Lösemitteldosiervorrichtung kann einen Lösemitteltank und eine Dosierpumpe umfassen. Die Dosierpumpe kann ausgelegt sein, Lösemittel im µl-Bereich zu dosieren. Die Dosierung des Lösemittels kann oberhalb des Niveaus des in der Überlaufrinne befindlichen Lackgemisches erfolgen. In anderen Worten kann die Lösemittelaustrittsöffnung der Lösemitteldosiervorrichtung oberhalb des Niveaus des in der Überlaufrinne befindlichen Lackgemisches angeordnet sein. Das Niveau des in der Überlaufrinne befindlichen Lackgemisches bleibt im Betriebszustand im Wesentlichen konstant. Das Niveau ist üblicherweise einige Millimeter bis Zentimeter unter der Oberkante des Lackbeckens. In anderen Worten kann die Lösemittelaustrittsöffnung der Lösemitteldosiervorrichtung einige Millimeter, beispielsweise zwischen etwa 5 mm und 20 mm, vorzugsweise zwischen etwa 10 mm und etwa 15 mm, unter der Oberkante des Lackbeckens in der Überlaufrinne angeordnet sein.

Vorteilhafterweise wird durch das Dosieren des Lösemittels direkt in die Überlaufrinne eine gute Vermischung des Lösemittels mit dem Lackgemisch erzielt. Insbesondere hat das in die Überlaufrinne dosierte Lösemittel länger Zeit, sich mit dem Lackgemisch zu vermischen und zu homogenisieren, bis es in dem Lackbecken mit den Brillengläsern in Kontakt tritt. Vorteilhafterweise kann durch das Dosieren des Lösemittels oberhalb des Niveaus des in der Überlaufrinne befindlichen Lackgemisches verhindert werden, dass Lösemittel an der Lösemittelaustrittsöffnung der Lösemitteldosiervorrichtung ständig mit dem Lackgemisch in Kontakt steht, so dass Ausfällungen an der Lösemittelaustrittsöffnung der Lösemitteldosiervorrichtung verhindert werden können.

Vorzugsweise kann auch Nachfüll-Lack direkt in die Überlaufrinne dosiert werden. Vorteilhafterweise wird hierdurch eine gute Vermischung des Nachfüll-Lacks mit dem Lackgemisch erzielt, da der in die Überlaufrinne dosierte Nachfüll-Lack länger Zeit hat, sich mit dem Lackgemisch zu vermischen, bis es in dem Lackbecken mit den Brillengläsern in Kontakt tritt. Vorzugsweise erfolgt die Dosierung des Nachfüll-Lacks unterhalb des Niveaus des Lackgemisches in der Überlaufrinne. Hierdurch wird die Vermischung des Lösemittels mit dem Lackgemisch weiter verbessert, da verhindert werden kann, dass der Nachfüll-Lack beim Eintropfen in das Lackgemisch Luft in das Lackgemisch einbringt, und somit Lufteinschlüsse erzeugt.

Die Lösemitteldosiervorrichtung ist derart konfiguriert, dass das von der Lösemitteldosiervorrichtung austretende Lösemittel an einer Innenwand der Überlaufrinne einen Lösemittelfilm ausbildet.

Die Innenwand der Überlaufrinne kann gleichzeitig die Außenwand des Lackbeckens sein. Zur Ausbildung des Lösemittelfilms kann die Lösemittelaustrittsöffnung in der Überlaufrinne geeignet konfiguriert und/oder ausgerichtet werden. Lösemittelfilm bedeutet, dass das Lösemittel sich flächig an der Innenwand der Überlaufrinne verteilt und insbesondere nicht von dem Lackgemisch in Tropfenform eingeschlossen wird. Der Lösemittelfilm bildet sich oberhalb des Niveaus des Lackgemisches in der Überlaufrinne aus, und fließt an der Innenwand der Überlaufrinne entlang in das Lackgemisch hinein.

Vorteilhafterweise kann durch das Ausbilden des Lösemittelfilms die Vermischung des Lösemittels mit dem Lackgemisch über eine große Fläche und gleichmäßig erfolgen, ohne dass es zu tropfenförmigen Lösemitteleinschlüssen kommt.

Die Lösemitteldosiervorrichtung umfasst ein Dosierrohr, wobei die Austrittsöffnung des Dosierrohrs gegen eine Innenwand der Überlaufrinne gerichtet ist.

Das Dosierrohr kann auch als Dosiernadel bezeichnet werden. Durch die Ausrichtung der Dosierrohr-Austrittsöffnung gegen die Innenwand der Überlaufrinne kann das Lösemittel gegen die Innenwand der Überlaufrinne gepumpt werden, wo es sich entlang der Innenwand verteilen kann und den Lösemittelfilm ausbilden kann. Der Lösemittelfilm wird zunächst oberhalb des Niveaus des Lackgemisches in der Überlaufrinne ausgebildet, und fließt daraufhin an der Innenwand der Überlaufrinne entlang in das Lackgemisch hinein. Das Dosierrohr kann vollständig oder teilweise außerhalb des Lackgemisch angeordnet sein, solange die Dosierrohr-Austrittsöffnung oberhalb des Niveaus des Lackgemisches angeordnet ist. Zur Ausrichtung der Dosierrohr-Austrittsöffnung kann das Dosierrohr einen gebogenen Abschnitt aufweisen. Die Dosierrohr-Austrittsöffnung kann abgeschrägt und/oder speziell konfiguriert sein, um die Ausbildung des Lösemittelfilms zu verbessern. Die speziell konfiguriert sein, um die Ausbildung des Lösemittelfilms zu verbessern. Die Senkrechte zur Dosierrohr-Austrittsöffnung kann senkrecht zur Innenwand der Überlaufrinne ausgerichtet sein, oder schräg zur Innenwand der Überlaufrinne nach oben oder nach unten geneigt sein.

Vorzugsweise ist entlang einer Oberkante des Lackbeckens eine Mehrzahl von Ausnehmungen ausgebildet.

Die Ausnehmungen können beispielsweise V-förmig oder U-förmig ausgebildet sein. Die Ausnehmungen können auch als Überlaufzacken bezeichnet werden. Vorzugsweise sind die Ausnehmungen in gleichmäßigen Abständen entlang der Oberkante des Lackbeckens ausgebildet.

Vorteilhafterweise wird durch die Ausnehmungen ein gleichmäßiges Überlaufen des Lackgemisches über die Oberkante des Lackbeckens in die Überlaufrinne gewährleistet. Dies führt zu gleichmäßigen Strömungsverhältnissen und trägt weiter zur Homogenisierung des Lackgemisches bei.

Vorzugsweise umfasst die Beschichtungsvorrichtung weiter: ein Gehäuse, in dessen Inneren das Lackbecken und ein Kühlmittelraum angeordnet sind, wobei an dem Kühlmittelraum ein Kühlmittel-Vorlauf und ein Kühlmittel-Rücklauf voneinander beabstandet angeordnet sind, und eine Kühlmittelführung spiralförmig um das Lackbecken herum von dem Kühlmittel-Vorlauf zu dem Kühlmittel-Rücklauf führend ausgebildet ist.

Das Gehäuse kann beispielsweise die Form eines Außenbeckens haben. Im aufgestellten Zustand, d.h. im Betriebszustand, können sowohl das Lackbecken als auch das Gehäuse nach oben hin offen sein. Zwischen den Eintauchvorgängen der Brillengläser kann das Gehäuse jedoch mittels eines Deckels verschlossen werden. Mit dem Inneren des Gehäuses wird der Raum verstanden, welcher durch die Gehäusewand eingeschlossen ist. Bei einem nach oben offenen Gehäuse bezeichnet das Innere des Gehäuses den Raum unterhalb der Oberkante des Gehäuses, welcher von der Gehäusewand eingeschlossen ist. Das Lackbecken ist derart im Inneren des Gehäuses angeordnet, dass der Beckenboden des Lackbeckens auf oder über dem Gehäuseboden angeordnet ist, und dass die Oberkante des Lackbeckens unter der Oberkante des Gehäuses angeordnet ist. Vorzugsweise ist die Oberkante des Lackbeckens etwa parallel zur Oberkante des Gehäuses um eine Höhendifferenz niedriger angeordnet, wobei die Höhendifferenz etwa 1/10 bis etwa 1/9 der Höhe bzw. Tiefe des Lackbeckens entsprechen kann. Die Höhendifferenz kann beispielsweise zwischen etwa 10 mm und etwa 25 mm, vorzugsweise etwa 15 mm und etwa 20 mm betragen, weiter vorzugsweise etwa 17 mm betragen. Vorzugsweise wird durch die Innenwand des Gehäuses, der Außenwand des Lackbeckens und einer dazwischen horizontal angeordneten Bodenplatte die Überlaufrinne gebildet.

Unter Kühlmittelraum wird ein Raum verstanden, in dem ein Kühlmittel bzw. ein Kühlmedium angeordnet sein kann, insbesondere fließen kann. Mit Kühlmittel-Vorlauf und Kühlmittel-Rücklauf werden Anschlussrohre oder Anschlussstutzen verstanden, welche an der Beschichtungsvorrichtung angeordnet sind, und mit dem Kühlmittelraum verbunden sind. Das Kühlmittel kann mittels einer Kühlmittelpumpe von dem Kühlmittel-Rücklauf zum Kühlmittel-Vorlauf gepumpt werden, so dass ein Kühlmittelkreislauf entsteht. Vorzugsweise ist der Kühlmittelraum zwischen der Gehäuseinnenwand und der Außenwand des Lackbeckens ausgebildet, wobei die Gehäuseinnenwand den Boden des Gehäuses beinhalten kann, und die Außenwand des Lackbeckens den Beckenboden des Lackbeckens beinhalten kann. Nach oben kann der Kühlmittelraum durch die Bodenplatte der Überlaufrinne verschlossen sein, so dass die Überlaufrinne über dem Kühlmittelraum angeordnet ist, und sowohl Überlaufrinne und Kühlmittelraum durch die Gehäuseinnenwand und die Außenwand des Lackbeckens ausgebildet werden. Die Kühlmittelführung kann durch ein spiralförmiges Blech ausgebildet sein, welches zwischen der Gehäuseinnenwand und der Außenwand des Lackbeckens angeordnet ist und sich um das Lackbecken herum erstreckt. Statt eines spiralförmigen Blechs kann auch eine spiralförmige Kunststoffplatte die Kühlmittelführung ausbilden.

Vorteilhafterweise wird durch die spiralförmige Ausbildung der Kühlmittelführung eine besonders gleichmäßige Temperierung des Lackgemisches in dem Lackbecken erreicht. Dies ist insbesondere bei Hochleistungs-Hartlacken wichtig, da diese einen Toleranzbereich von ±1 °C haben können. Die gleichmäßige Temperierung trägt weiter zur Homogenisierung des Lackgemisches bei.

Erfindungsgemäß umfasst die Beschichtungsvorrichtung weiter: ein Lackgemisch-Vorlauf zur Zuführung des Lackgemisches in das Lackbecken, wobei der Lackgemisch-Vorlauf an dem Lackbecken angeordnet ist, ein Lackgemisch-Rücklauf zur Entnahme des Lackgemisches aus der Überlaufrinne, wobei der Lackgemisch-Rücklauf an der Überlaufrinne angeordnet ist, und eine Verbindungsleitung, welche zwischen dem Lackgemisch-Vorlauf und dem Lackgemisch-Rücklauf angeordnet ist und diese verbindet.

Durch den Lackgemisch-Rücklauf und den Lackgemisch-Vorlauf kann ein Lackkreislauf ausgebildet werden. Mit Lackgemisch-Vorlauf und Lackgemisch-Rücklauf werden Anschlussrohre oder Anschlussstutzen verstanden, welche an der Beschichtungsvorrichtung angeordnet sind, und mit dem Lackbecken bzw. mit der Überlaufrinne verbunden sind. Der Lackgemisch-Rücklauf kann an der Bodenplatte der Überlaufrinne angeordnet sein. Der Lackgemisch-Vorlauf kann am Beckenboden des Lackbeckens angeordnet sein. Durch den Lackkreislauf wird das Lackgemisch ständig umgewälzt und homogenisiert. Neben dem Lösemittel kann auch das Lack in die Überlaufrinne nachdosiert werden, insbesondere unterhalb des Niveaus des Lackgemisches in der Überlaufrinne. Die Verbindungsleitung kann eine Pumpe, einen Filter und/oder weitere Elemente umfassen, sowie Kupplungselemente zwischen den Elementen und den Leitungen.

Vorzugsweise ist an einer Austrittsöffnung des Lackgemisch-Vorlaufs in dem Lackbecken ein Diffusor angeordnet, welcher dem austretenden Lackgemisch einen Drall um eine Längsachse der Austrittsöffnung verleiht.

Mit Drall ist eine rotatorische Bewegung des Lackgemisches um die Längsachse der Austrittsöffnung des Lackgemisch-Vorlaufs gemeint. Hierzu kann der Diffusor propellerförmig ausgebildet sein und Flügelelemente bzw. Leitplatten umfassen, welche schräg zum Beckenboden des Lackbeckens ausgebildet sind. Der Diffusor kann statisch, d.h. unbewegt sein. Vorzugsweise kann die Beschichtungsvorrichtung zwei oder mehr Lackgemisch-Vorläufe am Beckenboden des Lackbeckens umfassen, welche jeweils einen Diffusor aufweisen. Der Diffusor kann an dem Lackgemisch-Vorlauf oder an dem Beckenboden des Lackbeckens festgelegt sein.

Vorteilhafterweise wird durch den Drall des Lackgemisches eine bessere Vermischung des Lackgemisches im Lackbecken erreicht. Insbesondere erfasst die ausgebildete rotatorische Strömung alle Ecken des Lackbeckens, und es werden Totbereiche vermieden.

Vorzugsweise sind zwischen Abschnitten der Verbindungsleitung zur Kupplung der Abschnitte Flachdichtungen angeordnet.

Durch die Verwendung von Flachdichtungen ist eine höhere Dichtigkeit der Kupplungen im Vergleich zu Dichtungen mittels Teflonband gewährleistet. Dies verringert weiter die Bildung von Lufteinschlüssen im Lackgemisch.

Vorzugsweise ist die Verbindungsleitung mit dem Lackgemisch-Vorlauf und mit dem Lackgemisch-Rücklauf jeweils über eine im Wesentlichen zylindrisch oder konisch ausgebildete Schlauchtülle verbunden, wobei die Schlauchtülle glatt ausgebildet ist.

Die Schlauchtülle kann auch einen im Wesentlichen zylindrischen Abschnitt und einen im Wesentlichen konischen Abschnitt aufweisen. Die Schlauchtülle kann als gedrehtes Bauteil oder auch als Spritzgussteil ausgeführt sein. Glatt ausgebildet bedeutet, dass die Schlauchtülle insbesondere frei von Rillen oder Rippen ausgebildet ist. Die Schlauchtülle kann an dem Ende des Lackgemisch-Vorlaufs und des Lackgemisch-Rücklaufs ausgebildet sein, welcher aus dem Gehäuse nach außen hervorsteht. Das Fixieren der Verbindungsleitung mit der Schlauchtülle kann mittels Gelenkbolzenschellen erfolgen.

Vorteilhafterweise wird durch die glatten Schlauchtüllen verhindert, dass sich beim Belüften der Vorrichtung, d.h. wenn das gesamte Lackgemisch aus der Vorrichtung entfernt wird und ausgetauscht wird, Lufteinschlüsse in den Ecken der Rippen oder Rillen der Schlauchtülle bilden, die während des anschließenden Betriebs der Vorrichtung in das Lackgemisch geraten können. Somit wird die Homogenität des Lackgemisch weiter verbessert.

Vorzugsweise umfasst die Verbindungsleitung: eine Pumpe zum Fördern des Lackgemisches von dem Lackgemisch-Rücklauf zu dem Lackgemisch-Vorlauf, und einen oder mehrere Lackgemisch-Filter, wobei die Pumpe und die Lackgemisch-Filter vorzugsweise über eine Festverrohrung miteinander verbunden sind.

Mit Festverrohrung ist eine Verbindung mittels fester, formstabiler Rohre gemeint. Das Verbindungsrohr zwischen der Pumpe und dem Lackgemisch-Filter kann beispielsweise ein U-förmiges Rohr, vorzugsweise aus Stahl, sein. Die Anschlüsse können metallische Dichtungen aufweisen. Der Biegeradius des Verbindungsrohrs kann zwischen etwa dem 3-fachen und etwa dem 5-fachen des Innendurchmessers des Verbindungsrohrs liegen.

Vorteilhafterweise wird durch die Festverrohrung eine gleichmäßige Strömung in der Verbindungsleitung zwischen der Pumpe und dem Lackgemisch-Filter erreicht. Ferner kann die metallische Dichtung der Anschlüsse ein Eintreten von Luft in das Lackgemisch verhindern. Dadurch wird die Homogenität des Lackgemischs weiter verbessert.

Vorzugsweise weist der Lackgemisch-Vorlauf einen ersten Lackgemisch-Vorlauf und einen zweiten Lackgemisch-Vorlauf auf, und die Verbindungsleitung weist ein Y-förmiges Abzweigelement auf, um die Verbindungsleitung jeweils mit dem ersten und dem zweiten Lackgemisch-Vorlauf zu verbinden.

Vorzugsweise ist das Abzweigelement am Filterausgang des Lackgemisch-Filters angeordnet. Das Abzweigelement kann Formstabil sein und optional aus Stahl gefertigt sein. Das Abzweigelement kann den Lackgemisch-Strom in der Verbindungsleitung in zwei Lackgemisch-Ströme aufteilen, welche dann jeweils zu den zwei Lackgemisch-Vorläufen geleitet werden können. Das Abzeigelement kann einen gebogenen Abschnitt und einen Abzweigabschnitt aufweisen. Der gebogene Abschnitt kann einen Biegeradius von zwischen etwa dem 3-fachen und etwa dem 5-fachen des Innendurchmessers des Abzweigelements im gebogenen Abschnitt aufweisen. Der Winkel zwischen den zwei Abzweigrohren des Abzweigelements kann zwischen etwa 20° und etwa 40°, vorzugsweise aber etwa 30° betragen.

Vorteilhafterweise wird durch das Y-förmige Abzweigelement das Strömungsverhalten des Lackgemisch-Stroms gegenüber einer herkömmlichen T-Kupplung verbessert. Da der Richtungswechsel des Lackgemisch-Stroms sanfter verläuft, kommt es zu weniger Turbulenzen, was zu geringerer Bläschenbildung führt, und die Homogenität des Lackgemisches weiter verbessert.

Vorzugsweise ist die Verbindungsleitung zwischen Lackgemisch-Rücklauf und Lackgemisch-Vorlauf frei von Anschlüssen zur Nachdosierung von Lack und/oder Lösemittel. Weiter vorzugsweise weist die Verbindungsleitung über die gesamte Länge einen im Wesentlichen konstanten Innendurchmesser auf. Ferner können die Biegeradien und die inneren Oberflächenbeschaffenheiten der Verbindungsleitung strömungstechnisch optimiert sein.

Ein weiterer Aspekt der Erfindung betrifft ein Verfahren zum Nachdosieren von Lack und Lösemittel in eine Beschichtungsvorrichtung für eine Tauchbeschichtung von Brilengläsern, umfassend: Bereitstellen eines Lackbeckens zur Aufnahme eines Lackgemisches, Bereitstellen einer an dem Lackbecken angeordneten Überlaufrinne zur Aufnahme des von dem Lackbecken überlaufenden Lackgemisches, und Nachdosieren von Lösemittel direkt in die Überlaufrinne, vorzugsweise oberhalb des Niveaus des in der Überlaufrinne befindlichen Lackgemisches.

Ein weiterer Aspekt der Erfindung betrifft eine Beschichtungsvorrichtung zur Tauchbeschichtung von Brillengläsern, umfassend: ein Lackbecken zur Aufnahme eines Lackgemisches, und eine Lackdosiervorrichtung mit einem Lack-Nachfülltank, wobei der Lack-Nachfülltank ein Zumischen von Lösemittel in den Lack-Nachfülltank erlaubt, und wobei die Beschichtungsvorrichtung frei von einer Lösemitteldosiervorrichtung zur Dosierung von Lösemittel in den Lackbecken ist.

Die Lackdosiervorrichtung umfasst vorzugsweise eine Dosierpumpe. Der Lack-Nachfülltank kann größer dimensioniert sein als übliche Lack-Nachfülltanks, und kann eine Rührvorrichtung umfassen. Das Nachdosieren des Lack-Lösemittel-Gemisches aus dem Lack-Nachfülltank kann in der Überlaufrinne unterhalb des Niveaus des in der Überlaufrinne befindlichen Lackgemisches erfolgen.

Vorteilhafterweise kann durch das Vormischen von Lösemittel und Lack in dem Lack-Nachfülltank die Nachdosierung des Lösemittels in bereits vorgemischter Form mit dem Lack erfolgen, was die Gefahr der Bildung von Ausfällungen oder Lösemittel-Einschlüssen stark reduziert.

Ein weiterer Aspekt der Erfindung betrifft ein Verfahren zum Nachdosieren von Lack und Lösemittel in eine Beschichtungsvorrichtung für eine Tauchbeschichtung von Brilengläsern, umfassend: Bereitstellen eines Lack-Lösemittel-Gemisches in einem Lack-Nachfülltank durch Einfüllen von Lösemittel in den Lack-Nachfülltank, insbesondere auschließliches Einfüllen des Lösemittels in den Lack-Nachfülltank, und Vermischen des Lösemittels mit Lack im Inneren des Lack-Nachfülltanks, und Nachdosieren des Lack-Lösemittel-Gemisches in ein Lackgemisch des Lackkreislaufs.

Vorzugsweise umfassen die erfindungsgemäßen Verfahren weiter: Nachfüllen von Lösemittel in den Lack-Nachfülltank, insbesondere ausschließlich in den Lack-Nachfülltank, derart, dass der Feststoffgehalt des Lackgemisches des Lackkreislaufs auf einem konstanten Niveau gehalten wird.

Der Feststoffgehalt des Lackgemisches kann in regelmäßigen Abständen oder fortlaufend gemessen werden. Der Feststoffgehalt gibt Aufschluss über die Konzentration des Lacks im Lackgemisch.

Ein weiterer nicht beanspruchter Aspekt dieser Offenlegung betrifft ein Verfahren zur Tauchbeschichtung von Brillengläsern mittels eines Lackgemisches, umfassend: Schritte der oben beschriebenen erfindungsgemäßen Verfahren zum Nachdosieren von Lack und Lösemittel in einen Lackkreislauf für die Tauchbeschichtung, Eintauchen der Brillengläser in das Lackgemisch, und Ausziehen der Brillengläser aus dem Lackgemisch, wobei die Ausziehgeschwindigkeit in Abhängigkeit eines Feststoffgehalts des Lackgemisches eingestellt wird.

Durch die Ausziehgeschwindigkeit kann die auf den Brillengläsern verbleibende Lackgemisch-Menge beeinflusst werden. Durch langsames Herausziehen der Brillengläser aus dem Lackbecken verbleibt nur wenig Lackgemisch auf dem Brillengläser, und umgekehrt. Insbesondere kann die Ausziehgeschwindigkeit gesenkt werden, wenn der Feststoffgehalt steigt. So kann dauerhaft eine konstante Beschichtungsdicke (Feststoffmenge) auf dem Brillenglas erzielt werden, ohne Lösemittel in den Nachfülltank nachzudosieren. Der Feststoffgehalt im Lackgemisch kann über die Zeit ansteigen, da das Lösemittel sich über die Zeit aus dem Lackgemisch verfüchtigt.

Ein weiterer Aspekt der Erfindung betrifft eine Beschichtungsvorrichtung zur Tauchbeschichtung von Brillengläsern, umfassend: ein Lackbecken zur Aufnahme eines Lackgemisches, und ein Lackgemisch-Vorlauf zur Zuführung des Lackgemisches in das Lackbecken, wobei der Lackgemisch-Vorlauf in dem Lackbecken endet, und wobei der Lackgemisch-Vorlauf an seiner Austrittsöffnung einen Diffusor umfasst, welcher dem austretenden Lackgemisch einen Drall um eine Längsachse der Austrittsöffnung verleiht.

Ein weiterer Aspekt der Erfindung betrifft eine Beschichtungsvorrichtung zur Tauchbeschichtung von Brillengläsern, umfassend: ein Lackbecken zur Aufnahme eines Lackgemisches, und eine an dem Lackbecken angeordnete Überlaufrinne zur Aufnahme von dem Lackbecken überlaufenden Lackgemisches, wobei entlang einer Oberkante des Lackbeckens eine Mehrzahl von Ausnehmungen ausgebildet sind.

Ein weiterer Aspekt der Erfindung betrifft eine Beschichtungsvorrichtung zur Tauchbeschichtung von Brillengläsern, umfassend: ein Gehäuse, in dessen Inneren ein Lackbecken zur Aufnahme eines Lackgemisches und ein Kühlmittelraum angeordnet ist, und wobei an dem Kühlmittelraum ein Kühlmittel-Vorlauf und ein Kühlmittel-Rücklauf voneinander beabstandet angeordnet sind, und eine Kühlmittelführung spiralförmig um das Lackbecken herum von dem Kühlmittel-Vorlauf zu dem Kühlmittel-Rücklauf führend ausgebildet ist.

Ein weiterer Aspekt der Erfindung betrifft eine Beschichtungsvorrichtung zur Tauchbeschichtung von Brillengläsern, umfassend: ein Lackbecken zur Aufnahme eines Lackgemisches; eine an dem Lackbecken angeordnete Überlaufrinne zur Aufnahme des von dem Lackbecken überlaufenden Lackgemisches; ein Lackgemisch-Vorlauf zur Zuführung des Lackgemisches in das Lackbecken, wobei der Lackgemisch-Vorlauf an dem Lackbecken angeordnet ist; ein Lackgemisch-Rücklauf zur Entnahme des Lackgemisches aus der Überlaufrinne, wobei der Lackgemisch-Rücklauf an der Überlaufrinne angeordnet ist; und eine Verbindungsleitung, welche zwischen dem Lackgemisch-Vorlauf und dem Lackgemisch-Rücklauf angeordnet ist und diese verbindet, wobei zwischen Abschnitten der Verbindungsleitung zur Kupplung der Abschnitte Flachdichtungen angeordnet sind.

Ein weiterer Aspekt der Erfindung betrifft eine Beschichtungsvorrichtung zur Tauchbeschichtung von Brillengläsern, umfassend: ein Lackbecken zur Aufnahme eines Lackgemisches; eine an dem Lackbecken angeordnete Überlaufrinne zur Aufnahme des von dem Lackbecken überlaufenden Lackgemisches; ein Lackgemisch-Vorlauf zur Zuführung des Lackgemisches in das Lackbecken, wobei der Lackgemisch-Vorlauf an dem Lackbecken angeordnet ist; ein Lackgemisch-Rücklauf zur Entnahme des Lackgemisches aus der Überlaufrinne, wobei der Lackgemisch-Rücklauf an der Überlaufrinne angeordnet ist; und eine Verbindungsleitung, welche zwischen dem Lackgemisch-Vorlauf und dem Lackgemisch-Rücklauf angeordnet ist und diese verbindet, wobei die Verbindungsleitung mit dem Lackgemisch-Vorlauf und mit dem Lackgemisch-Rücklauf jeweils über eine im Wesentlichen zylindrisch oder konisch ausgebildete Schlauchtülle verbunden ist, wobei die Schlauchtülle glatt ausgebildet ist.

Die zu den jeweiligen Aspekten genannten Vorteile und die zu den einzelnen Merkmalen der jeweiligen Aspekte erwähnten Erläuterungen gelten gleichermaßen für die anderen Aspekte der Erfindung.

### Fiqurenbeschreibunq

Im Folgenden werden Ausführungsformen der vorliegenden Erfindung anhand der Figuren näher erläutert.
- Fig. 1: zeigt die Beschichtungsvorrichtung zur Tauchbeschichtung von Brillengläsern gemäß einer Ausführungsform in einer Draufsicht.
- Fig. 2: zeigt eine Schnittansicht der Beschichtungsvorrichtung entlang der Linie A-A aus der Richtung Z in Fig. 1.
- Fig. 3: zeigt eine Schnittansicht der Beschichtungsvorrichtung entlang der Linie B-B aus der Richtung X in Fig. 1.
- Fig. 4: zeigt einen Abschnitt der Innenstruktur der Beschichtungsvorrichtung in einer perspektivischen Ansicht.
- Fig. 5: zeigt die Beschichtungvorrichtung gemäß einer weiteren Ausführungsform in einer Draufsicht, als Zusammenbauzeichnung mit eingesetzten Diffusoren, eingebauter Lösemitteldosiervorrichtung und Tauchhülse.
- Fig. 6: zeigt eine Schnittansicht der Beschichtungsvorrichtung aus Fig. 5 entlang der Linie A-A in Fig. 5.
- Fig. 7: zeigt die Beschichtungsvorrichtung aus Fig. 5 in einer Seitenansicht aus der Richtung X in Fig. 5.
- Fig. 8: zeigt die Beschichtungsvorrichtung aus Fig. 5 in einer perspektivischen Ansicht.
- Fig. 9: zeigt das Dosierrohr der Lösemitteldosiervorrichtung in verschiedenen Ansichten.
- Fig. 10: zeigt das Dosierrohr-Montageelement in verschiedenen Ansichten.
- Fig. 11: zeigt den Diffusor in einer perspektivischen Ansicht und in einer Draufsicht.
- Fig. 12: zeigt den Diffusor ein einer Schnittansicht, einer Seitenansicht und einer Draufsicht.
- Fig. 13: zeigt das Modul von Pumpe und Filter in einer perspektivischen Ansicht.
- Fig. 14: zeigt das Abzweigelement in verschiedenen Ansichten.

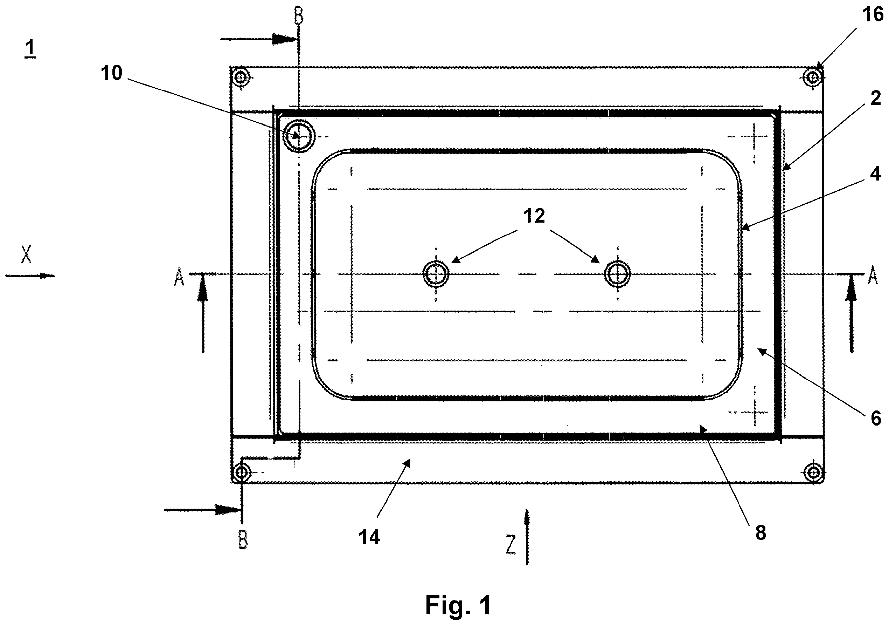

Fig. 1 zeigt die Beschichtungsvorrichtung 1 zur Tauchbeschichtung von Brillengläsern gemäß einer Ausführungsform in einer Draufsicht.

Die Beschichtungsvorrichtung 1 gemäß dieser Ausführungsform weist ein Gehäuse 2 und ein in dem Gehäuse 2 angeordnetes Lackbecken 4 auf. Das Gehäuse 2 kann in Form einer Außenwanne ausgebildet sein, welche das Lackbecken 4 umgibt. Um das Lackbecken 4 herum ist eine Überlaufrinne 6 angeordnet, welche durch die Außenwand des Lackbeckens 4, der Innenwand des Gehäuses 2 und einer Bodenplatte 8 ausgebildet sein kann. In einer Ecke der Überlaufrinne 6 kann in der Bodenplatte 8 eine Eintrittsöffnung eines Lackgemisch-Rücklaufs 10 angeordnet sein. Die Eintrittsöffnung des Lackgemisch-Rücklaufs 10 stellt die Austrittsöffnung der Überlaufrinne 6 dar. Im mittleren Bereich des Beckenbodens des Lackbeckens 4 können zwei Austrittsöffnungen des Lackgemisch-Vorlaufs 12 voneinander beabstandet angeordnet sein. Die Austrittsöffnungen des Lackgemisch-Vorlaufs 12 stellen die Eintrittsöffnung für das Lackgemisch in das Lackbecken 4 dar.

Das Gehäuse 2 kann einen Einstellrahmen 14 aufweisen, welcher das Gehäuse 2 umgibt. An den vier Ecken des Einstellrahmens 14 können jeweils Einstellschrauben 16 angeordnet sein, mit welchen eine Nivellierung der Beschichtungsvorrichtung 1 vorgenommen werden kann. Insbesondere kann mittels der Einstellschrauben 16 die Ausrichtung des Lackbeckens 4 derart eingestellt werden, dass das Lackgemisch gleichmäßig über den Rand des Lackbeckens 4 in die Überlaufrinne 6 fließt.

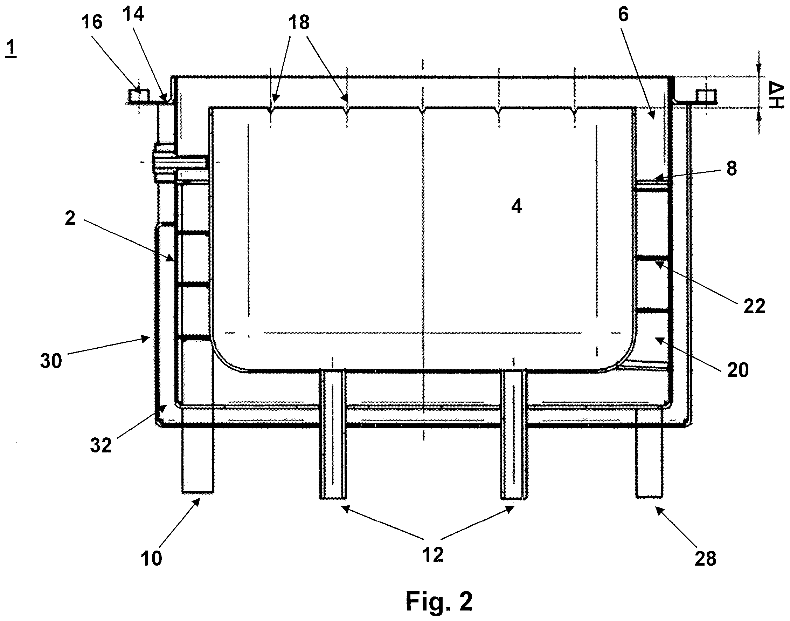

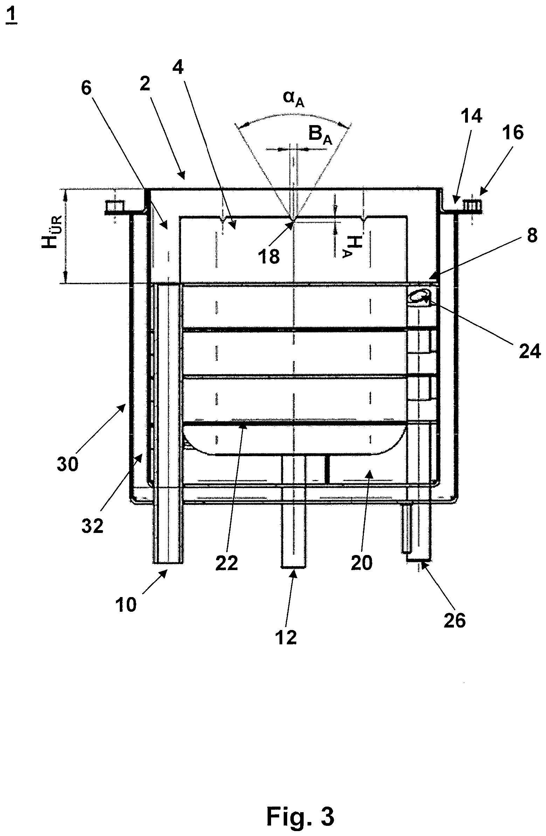

Fig. 2 zeigt eine Schnittansicht der Beschichtungsvorrichtung entlang der Linie A-A aus der Richtung Z in Fig. 1. Fig. 3 zeigt eine Schnittansicht der Beschichtungsvorrichtung entlang der Linie B-B aus der Richtung X in Fig. 1.

Die Beschichtungsvorrichtung 1 kann über den Einstellrahmen 14 und die Einstellschrauben 16 mit einem nicht gezeigten Halterahmen verbunden werden, und dadurch aufgestellt werden. Im aufgestellten Zustand sind sowohl das Lackbecken 4 als auch das Gehäuse 2 nach oben hin offen. Das Lackbecken 4 ist derart in dem Gehäuse 2 angeordnet, dass die Oberkante des Lackbeckens 4 etwa parallel zur Oberkante des Gehäuses 2 um eine Höhendifferenz ΔH niedriger angeordnet ist. Die Höhendifferenz ΔH kann etwa 1/10 bis etwa 1/9 der Höhe bzw. Tiefe des Lackbeckens 4 entsprechen.

Entlang der Oberkante des Lackbeckens 4 können V-förmige Ausnehmungen 18, auch Überlaufzacken 18 genannt, in gleichmäßigen Abständen voneinander angeordnet sein. In Längsrichtung des Lackbeckens 4 können auf jeder Seite des Lackbeckens 4 fünf Ausnehmungen 18 entlang der Oberkante angeordnet sein. In Breitenrichtung des Lackbeckens 4 können auf jeder Seite des Lackbeckens 4 drei Ausnehmungen 18 entlang der Oberkante angeordnet sein. Die Ausnehmungen 18 sorgen für ein gleichmäßiges Übertreten des Lackgemisches über die Oberkante des Lackbeckens 4, wenn Lackgemisch über den am Beckenboden angeordneten Lackgemisch-Vorlauf 12 in das Lackbecken 4 gepumpt wird. Die Ausnehmungen können beispielsweise einen Öffnungswinkel α_{A} von etwa 60°, eine Breite B_{A} von etwa 4 mm und eine Höhe H_{A} von etwa 3,5 mm aufweisen.

Um die Oberkante des Lackbeckens 4 herum ist die Überlaufrinne 6 angeordnet. Die Überlaufrinne 6 kann eine Höhe H_{ÜR}, gemessen von der Bodenplatte 8 zur Oberkante des Gehäuses 2, von etwa 1/4 bis etwa 1/3 der Höhe bzw. Tiefe des Gehäuses 2 entsprechen.

Die in den Figuren 1 bis 3 nicht gezeigte Lösemitteldosiervorrichtung ist derart ausgebildet, dass Lösemittel direkt in die Überlaufrinne 6 zudosiert werden kann. Das Lösemittel kann hierbei oberhalb des Niveaus des Lackgemisches in der Überlaufrinne 6 zudosiert werden, also von Außerhalb des Lackgemisches. Die Zudosierung in der Überlaufrinne 6 kann aber dennoch unterhalb des Oberkante des Lackbeckens 4 erfolgen. Die Lösemitteldosiervorrichtung kann beispielsweise Lösemittel auf etwa halber Höhe H_{ÜR}/2 der Überlaufrinne 6, gemessen von der Bodenplatte 8, in die Überlaufrinne 6 eingebracht werden.

Die Eintrittsöffnung des Lackgemisch-Rücklaufs 10 kann an der Bodenplatte 8 der Überlaufrinne 6 angeordnet sein, und der Lackgemisch-Rücklauf 10 in Form eines Rohres kann sich durch den Kühlmittelraum 20 hindurch erstrecken, um am unteren Ende des Gehäuses herauszuführen.

Der Kühlmittelraum 20 kann durch die Außenwand und den Beckenboden des Lackbeckens 4 und die Innenwand und den Gehäuseboden des Gehäuses 2 ausgebildet sein. Nach oben hin kann der Kühlmittelraum 20 durch die Bodenplatte 8 der Überlaufrinne 6 verschlossen sein, so dass die Überlaufrinne 6 über dem Kühlmittelraum 20 angeordnet sein kann.

Im Inneren des Kühlmittelraums 20 kann ein spiralförmiges Blech 22 angeordnet sein, welches sich um das Lackbecken 4 herum erstreckt. Das spiralförmige Blech 22 kann derart ausgebildet sein, dass durch die Außenwand und den Beckenboden des Lackbeckens 4, die Innenwand und den Gehäuseboden des Gehäuses 2 und das spiralförmige Blech 22 eine spiralförmige Kühlmittelführung ausgebildet wird. Die Kühlmittelführung kann sich von einer Austrittsöffnung 24 des Kühlmittel-Vorlaufs 26 in einer oberen Ecke des Kühlmittelraums 20 zu einer Eintrittsöffnung des Kühlmittel-Rücklaufs 28 am Gehäuseboden des Gehäuses 2 spiralförmig erstrecken.

Um die Außenwand und den Gehäuseboden des Gehäuses 2 herum kann eine Außenhülle 30 zur thermischen Isolierung des Gehäuses 2 von der Umgebung ausgebildet sein. Der Zwischenraum 32 zwischen der Außenhülle 30 und dem Gehäuse 2 kann mit einem Isolationsmaterial gefüllt sein. Der Zwischenraum 32 kann daher auch als Isolierraum 32 bezeichnet werden.

Eine Tauchhülse 34 zur Aufnahme eines Fühlers zum Messen der Temperatur des Lackgemisches in der Überlaufrinne 6 und/oder dem Lackbecken 4 kann an dem Gehäuse 2 angeordnet sein, und sich durch den unteren Bereich der Überlaufrinne 6 hindurch bis zur Außenwand des Lackbeckens 4 erstrecken.

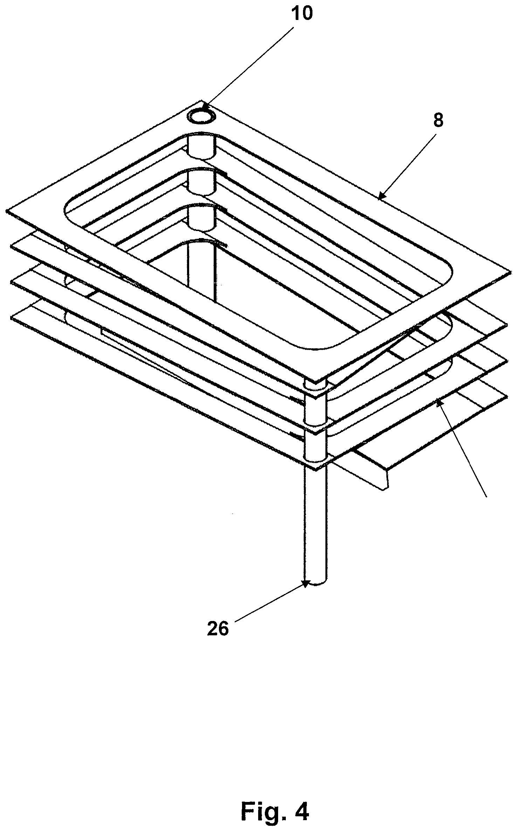

Fig. 4 zeigt einen Abschnitt der Innenstruktur der Beschichtungsvorrichtung 1 in einer perspektivischen Ansicht. Die gezeigte Struktur kann in der Beschichtungsvorrichtung 1 zwischen dem Lackbecken 4 und dem Gehäuse 2 angeordnet sein. Die Eintrittsöffnung des Lackgemisch-Rücklaufs 10 kann an bzw. in der Bodenplatte 8 der Überlaufrinne 6 ausgebildet sein. Das spiralförmige Blech 22 kann aus einer Mehrzahl von Einzelblechen zusammengesetzt, insbesondere verschweißt, sein. Der Lackgemisch-Rücklauf 10 sowie der Kühlmittel-Vorlauf 26 können sich durch das spiralförmige Blech 22 in den einzelnen Ebenen hindurch erstrecken. Hierzu können entsprechende Ausnehmungen in dem spiralförmigen Blech 22 ausgebildet sein.

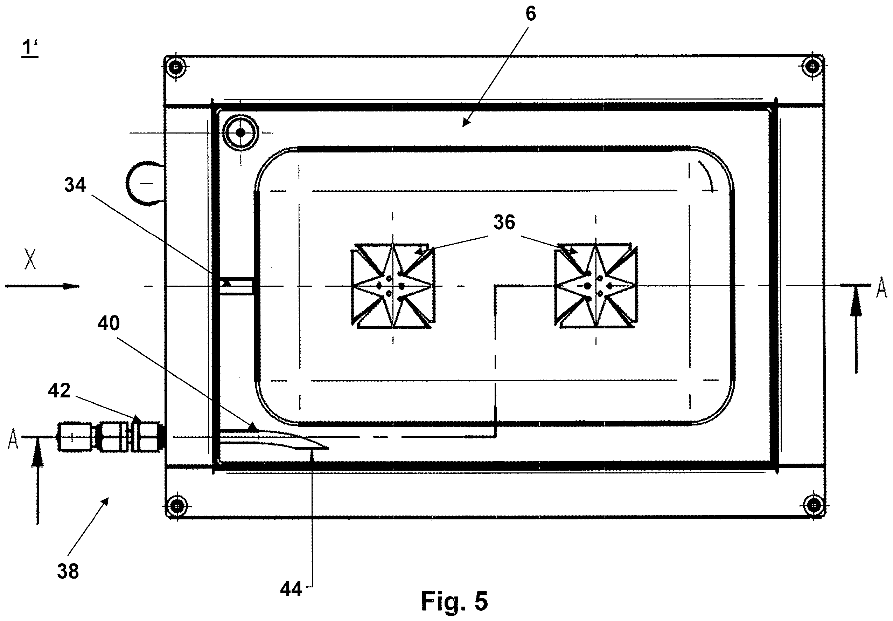

Figuren 5 bis 8 zeigen die Beschichtungvorrichtung 1' gemäß einer weiteren Ausführungsform als Zusammenbauzeichnung mit eingesetzten Diffusoren, eingebauter Lösemitteldosiervorrichtung und Tauchhülse. Die Beschichtungsvorrichtung 1' unterscheidet sich von der vorangehend beschriebenen Beschichtungsvorrichtung 1 darin, dass an den Austrittsöffnungen des Lackgemisch-Vorlaufs 12 jeweils ein Diffusor 36 angeordnet ist, und dass die Beschichtungsvorrichtung 1' eine Lösemitteldosiervorrichtung 38 mit einem Dosierrohr 40 umfasst. Die weitere Ausgestaltung der Beschichtungsvorrichtung 1' entspricht der Ausgestaltung der Beschichtungsvorrichtung 1.

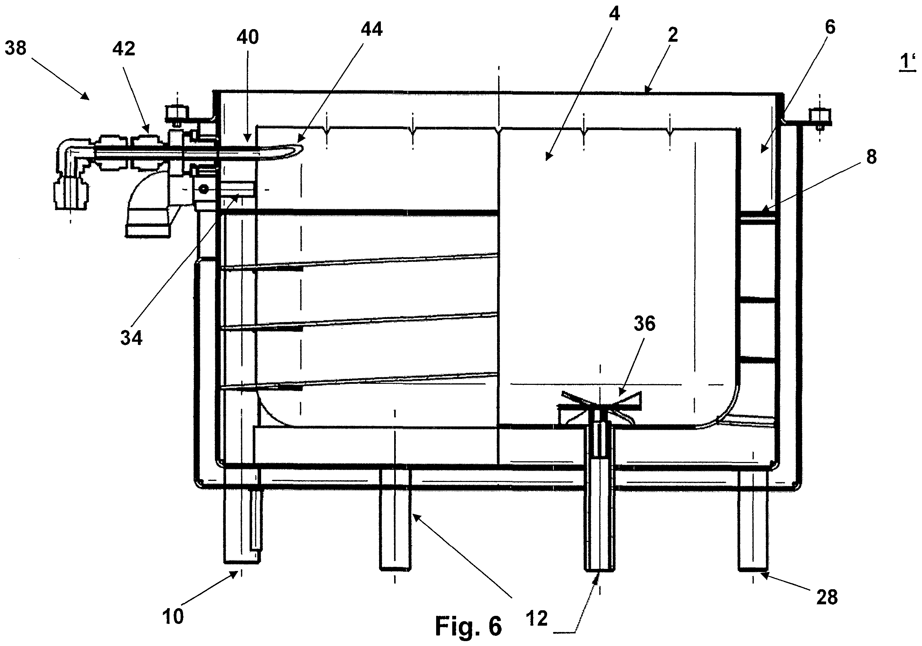

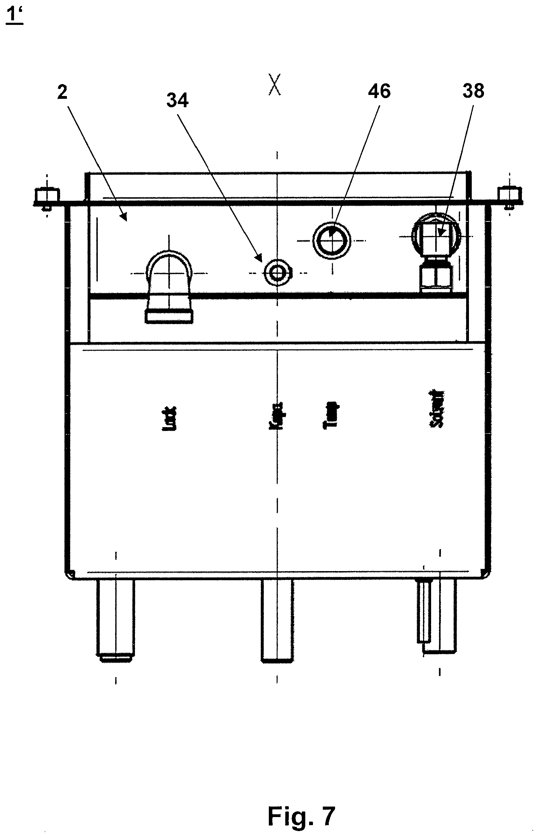

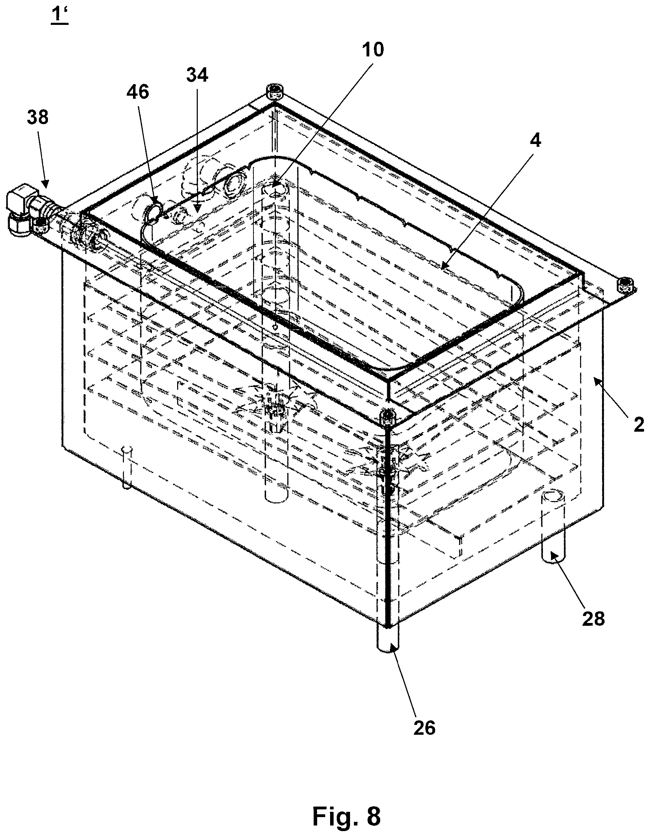

Fig. 5 zeigt die Beschichtungsvorrichtung 1' in einer Draufsicht. Fig. 6 zeigt eine Schnittansicht der Beschichtungsvorrichtung aus Fig. 5 entlang der Linie A-A in Fig. 5. Fig. 7 zeigt die Beschichtungsvorrichtung aus Fig. 5 in einer Seitenansicht aus der Richtung X in Fig. 5. Fig. 8 zeigt die Beschichtungsvorrichtung aus Fig. 5 in einer perspektivischen Ansicht.

Das Dosierrohr 40 kann mittels einer Dosierrohr-Montageelement 42 an dem Gehäuse 2 befestigt sein, und sich etwa parallel zur Bodenplatte 8 der Überlaufrinne 6 im Inneren der Überlaufrinne 6 erstrecken. Die Dosierrohr-Austrittsöffnung 44 kann gegen die Innenwand der Überlaufrinne 6, d.h. gegen die Innenwand des Gehäuses 2 und/oder gegen die Außenwand des Lackbeckens 4, gerichtet sein. Insbesondere kann die Dosierrohr-Austrittsöffnung 44 parallel zur Innenwand der Überlaufrinne 6 ausgerichtet sein. Hierzu kann das Dosierrohr 40 zumindest abschnittsweise gebogen sein. Die Dosierrohr-Austrittsöffnung 44 kann in vertikaler Richtung etwa auf halber Höhe der Überlaufrinne 6 angeordnet sein. Die Dosierrohr-Austrittsöffnung 44 kann jedoch auch höher oder tiefer angeordnet sein, insbesondere kann die Dosierrohr-Austrittsöffnung 44 unterhalb der Oberkante des Lackbeckens 4 angeordnet ist. Der Abstand zwischen der Dosierrohr-Austrittsöffung 44 und der Innenwand der Überlaufrinne 6 wird so gewählt, dass sich ein Lösemittelfilm entlang der Innenwand der Überlaufrinne 6 ausbilden kann, wenn Lösemittel aus der Dosierrohr-Austrittsöffnung 44 austritt. Der Abstand kann beispielsweise etwa dem Innendurchmesser des Dosierrohrs 40 entsprechen.

Die Lösemitteldosiervorrichtung 38 kann weiter eine nicht gezeigte Dosierpumpe und einen Lösemitteltank umfassen. Die Dosierpumpe kann konfiguriert sein, Lösemittel im µl-Bereich exakt in die Überlaufrinne 6 zu dosieren.

Wie in Fig. 7 gezeigt ist, kann das Gehäuse 2 an einer Breitenseite auf Höhe der Überlaufrinne 6 verschiedene Durchgangslöcher aufweisen. Durch einen der Durchgangslöcher wird die Lösemitteldosiervorrichtung 38 geführt. Ein weiterer Durchgang dient zur Aufnahme der Tauchhülse 34 für den Temperaturfühler. Ein weiterer Durchgang 46 kann dazu dienen, einen weiteren Temperaturfühler, einen Füllstandshöhenmesser und/oder eine Lackdosiervorrichtung ins Innere der Überlaufrinne 6 zu führen.

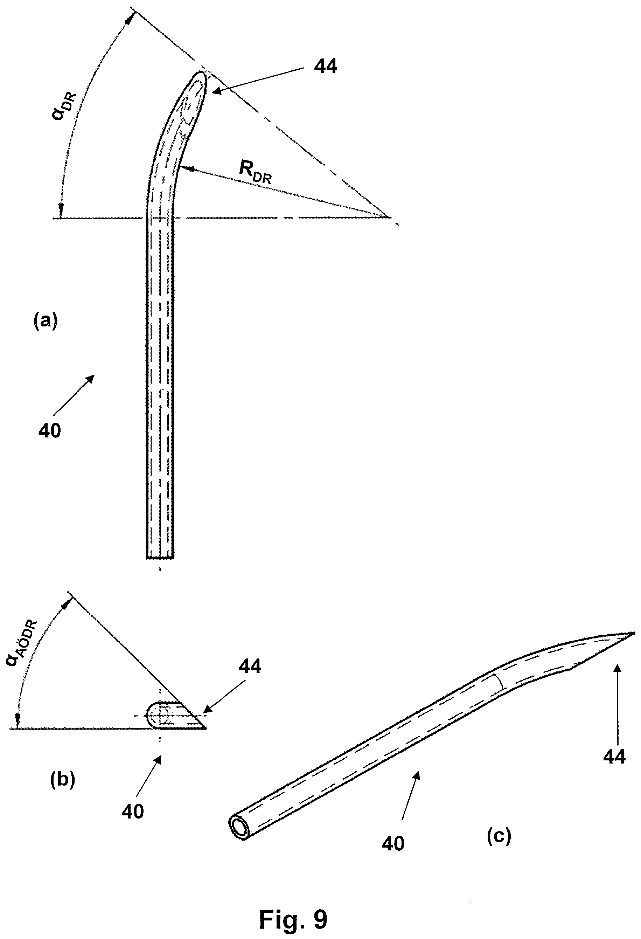

Fig. 9 zeigt das Dosierrohr 40 der Lösemitteldosiervorrichtung 38 in verschiedenen Ansichten.

Das Dosierrohr 40 kann einen geraden Abschnitt und einen gebogenen Abschnitt aufweisen. Der gerade Abschnitt dient dazu, das Dosierrohr 40 durch die Befestigungsvorrichtung 42 und durch die Gehäusewand des Gehäuses 2 in das Innere der Überlaufrinne 6 zu führen. Der gebogene Abschnitt dient dazu, das durch das Dosierrohr 40 fließende Lösemittel gegen eine Innenwand der Überlaufrinne 6 zu lenken. Die Dosierrohr-Austrittsöffnung 44 ist an dem Ende des gebogenen Abschnitts angeordnet. Der gebogene Abschnitt des Dosierrohrs 40 kann einen Biegeradius R_{DR} aufweisen, welcher zwischen dem etwa 10-fachen und dem etwa 15-fachen des Innendurchmessers des Dosierrohrs 40 entspricht. Vorzugsweise entspricht der Biegeradius R_{DR} etwa dem 12,5-fachen des Innendurchmessers des Dosierrohrs 40. Der Biegewinkel α_{DR} kann etwa 30° bis etwa 50° betragen, vorzugsweise 40°.

Wie in Fig. 9(b) gezeigt, kann die Dosierrohr-Austrittsöffnung 44 abgeschrägt sein. Insbesondere kann die Dosierrohr-Austrittsöffnung 44 gegenüber der Krümmungsachse des gebogenen Abschnitts schräg ausgebildet sein. In anderen Worten kann die Dosierrohr-Austrittsöffnung 44 schräg nach oben oder unten gerichtet sein, wenn das Dosierrohr 40 mit dem geraden Abschnitt und dem gebogenen Abschnitt horizontal ausgerichtet wird. Die Dosierrohr-Austrittsöffung 44 kann gegenüber dem ausgerichteten Zustand gegenüber der Horizontalen einen Winkel α_{AÖDR} von zwischen etwa 35° bis etwa 55°, vorzugsweise 45°, aufweisen. Ferner kann die Dosierrohr-Austrittsöffnung 44 etwa parallel zur Längsrichtung des geraden Abschnitts des Dosierrohrs 40 ausgebildet sein. Fig. 9(a) zeigt eine Schnittansicht des Diffusors entlang der Schnittlinie A-A in Fig. 9(c).

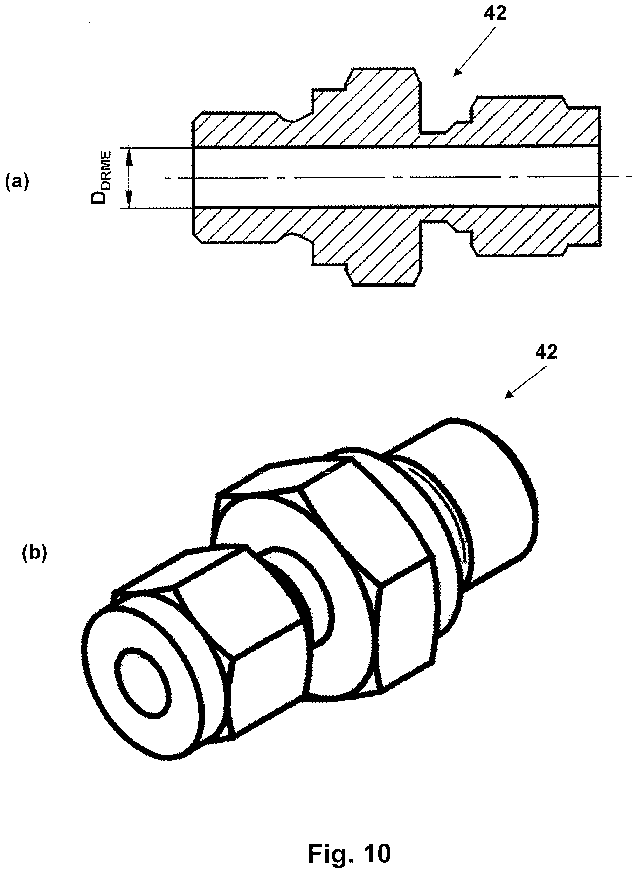

Fig. 10 zeigt das Dosierrohr-Montageelement 42 in verschiedenen Ansichten. Mittels des Dosierrohr-Montageelements 42 kann das Dosierrohr 40 an dem Gehäuse 2 befestigt und korrekt in der Überlaufrinne 6 ausgerichtet werden. Der Durchmesser D_{DRME} des Durchgangslochs des Dosierrohr-Montageelements 42 entspricht etwa dem Außendurchmesser des Dosierrohrs 40, so dass der gerade Abschnitt des Dosierrohrs 40 fluiddicht in diesen eingepasst werden kann.

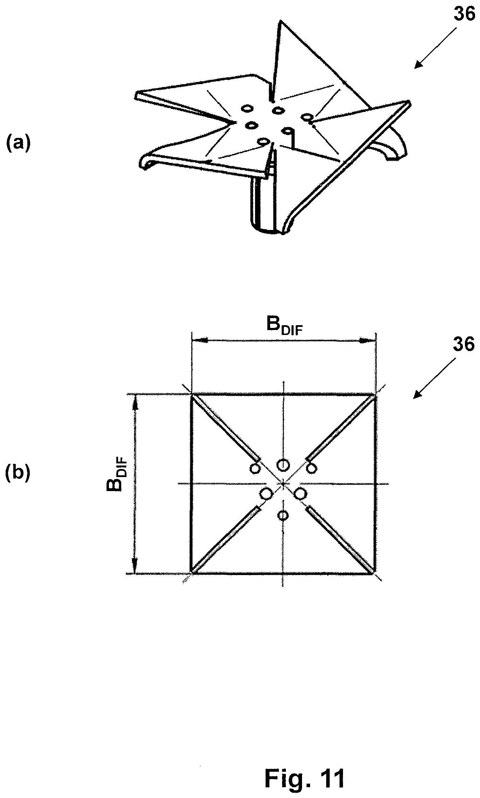

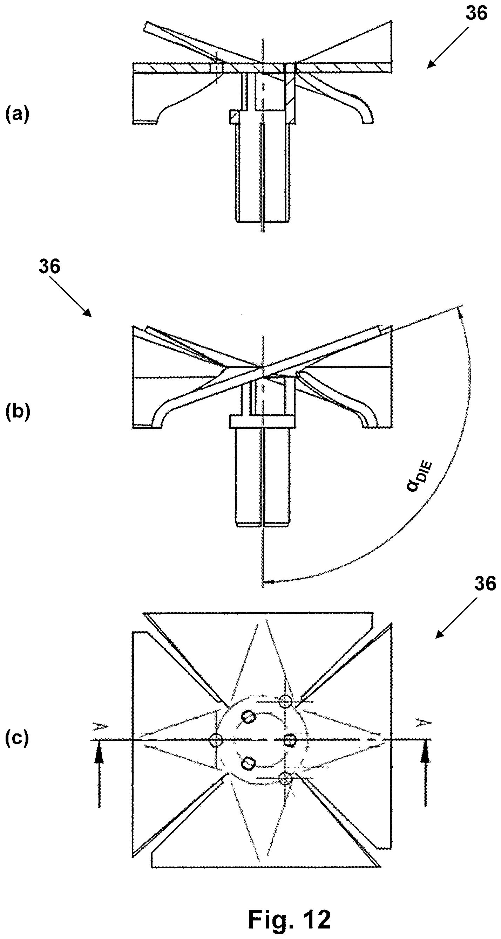

Figuren 11 und 12 zeigen den Diffusor 36 in verschiedenen Ansichten. Der Diffusor 36 ist ein Bauelement, welches dem aus dem Lackgemisch-Vorlauf 12 austretenden Lackgemisch einen Drall verleiht, so dass sich das austretende Lackgemisch besser im Lackbecken 4 verteilt. Der Diffusor 36 kann propellerförmig ausgebildet sein, und kann beispielsweise 4 Flügelelemente umfassen. In der Draufsicht kann der Diffusor 36 quadratisch ausgebildet sein, mit einer Kantenlänge von B_{DIF}. Insbesondere kann der Diffusor 36 in der Draufsicht rotationssymmetrisch ausgebildet sein.

Zum Ausbilden der Flügelelemente können in einem quadratischen Plattenelement vier Schlitze vorgesehen werden, welche sich von den vier Ecken in Richtung Plattenmitte erstrecken. Im mittleren Bereich des Plattenelements wird ein schlitzloser Bereich gelassen. Die so ausgebildeten Teilabschnitte des Plattenelements können an den jeweiligen Ecken des Plattenelements jeweils nach oben und nach unten gebogen werden, um so die Flügelelemente auszubilden. Die Flügelelemente umfassen Leitflächen, die das aus dem Lackgemisch-Vorlauf 12 austretende Lackgemisch in eine Richtung um die Längsachse der Austrittsöffnung des Lackgemisch-Vorlaufs 12 leitet, und somit dem austretenden Lackgemisch einen Drall um diese Längsachse verleiht. Die Flügelelemente bzw. die Leitflächen davon können in einem Winkel α_{DIF} von zwischen etwa 100° und 120°, vorzugsweise in einem Winkel von 110° zu der Längsachse des Lackgemisch-Vorlaufs 12 bzw. der Austrittsöffnung davon ausgebildet sein.

Unterhalb des Plattenelements mit den Flügelelementen können Verbindungsstege vorgesehen sein, welche das Plattenelement mit einem Befestigungselement verbinden. Das Befestigungselement kann rohrförmig ausgebildet sein und kann in die Austrittsöffnung des Lackgemisch-Vorlaufs 12 eingesteckt werden, um an diesem befestigt zu werden. Die Verbindungsstege können das Plattenelement in einem optimalen Abstand zur Austrittsöffnung des Lackgemisch-Vorlaufs 12 halten, so dass austretendes Lackgemisch aus dem Lackgemisch-Vorlauf 12 durch das Plattenelement umgelenkt werden kann.

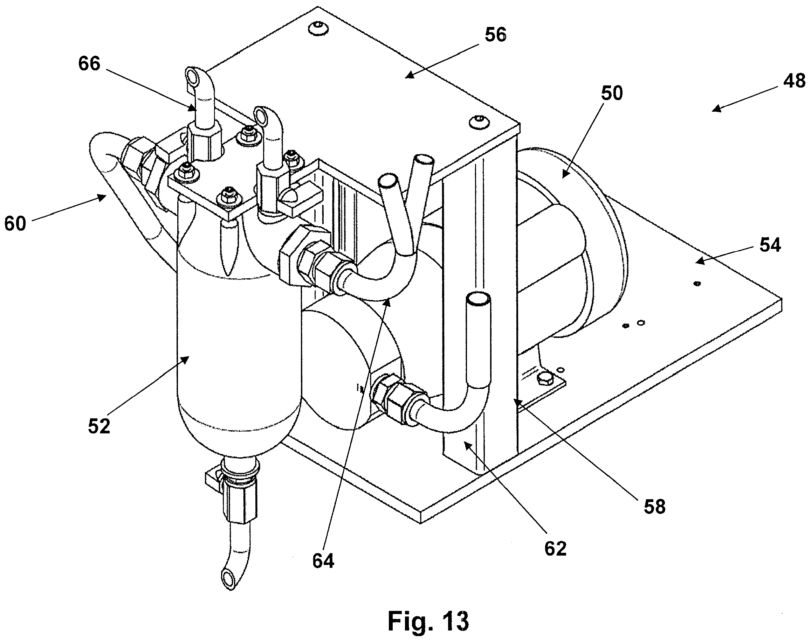

Fig. 13 zeigt das Modul 48 von Pumpe 50 und Lackgemisch-Filter 52 in einer perspektivischen Ansicht.

Das Modul 48 kann Teil des Lackgemisch-Kreislaufs sein. Insbesondere kann das Modul 48 Teil der Verbindungsleitung zwischen dem Lackgemisch-Rücklauf 10 und dem Lackgemisch-Vorlauf 12 sein. Die Pumpe 50 kann als Umwälzpumpe Lackgemisch aus der Überlaufrinne 6 über den Lackgemisch-Rücklauf 10 und den Lackgemisch-Vorlauf 12 ins Lackbecken 4 pumpen. Der Lackgemisch-Filter 52 kann Unreinheiten und/oder Luftblasen aus dem Lackgemisch filtern.

Die Pumpe 50 kann an einer Pumpenbefestigungsplatte 54 befestigt sein, insbesondere verschraubt sein, und der Lackgemisch-Filter 52 kann an einer Filterbefestigungsplatte 56 befestigt sein, insbesondere verschraubt sein. Pumpenbefestigungsplatte 54 und Filterbefestigungsplatte 56 können über Profilstangen 58 miteinander verbunden sein, insbesondere verschraubt sein, so dass die Pumpe 50 und der Lackgemisch-Filter 52 ein Modul 48 bilden können. Pumpe 50 und Lackgemisch-Filter 52 können über eine Festverrohrung, insbesondere einem U-förmigen Verbindungsrohr 60, vorzugsweise aus Stahl, miteinander verbunden sein, wobei die Anschlüsse metallische Dichtungen aufweisen können. Auch Pumpeneingangsrohr 62 und/oder das Abzweigelement 64 am Filterausgang können als Festverrohrung, vorzugsweise aus Stahl, ausgebildet sein und metallische Dichtungen an den Anschlüssen aufweisen.

Der Lackgemisch-Filter 52 kann einen oder mehrere Luftauslässe 66 aufweisen, mittels denen die sich im Lackgemisch-Filter 52 gesammelte Luft durch Betätigen eines Hebels herausgelassen werden kann.

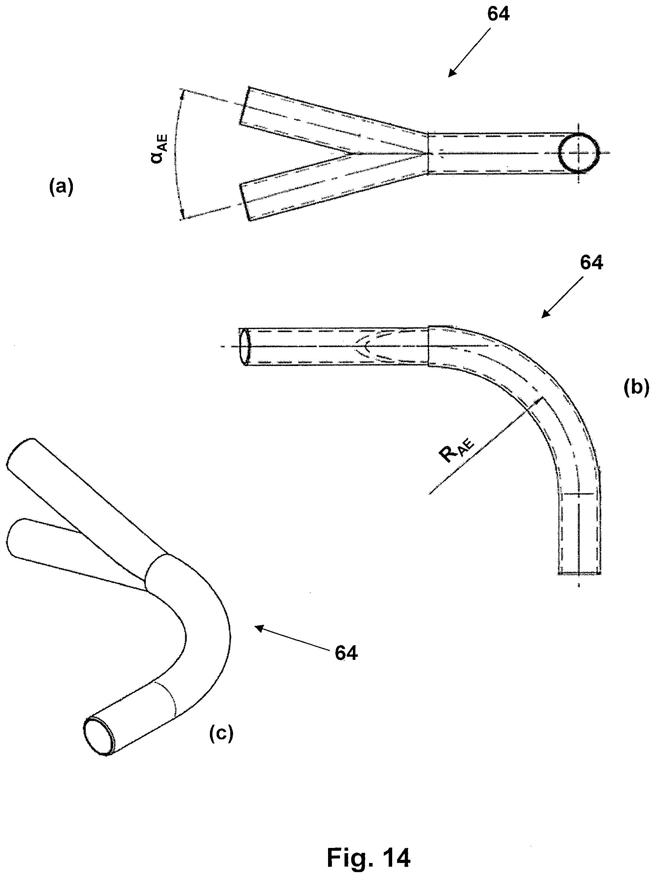

Fig. 14 zeigt das Abzweigelement 64 in verschiedenen Ansichten.

Das Abzeigelement 64 kann das aus dem Filter 52 austretenden Lackgemisch in zwei Lackgemisch-Ströme aufteilen, welche dann jeweils zu den zwei Lackgemisch-Vorläufen 12 geleitet werden können. Das Abzeigelement 64 kann einen gebogenen Abschnitt und einen Abzweigabschnitt aufweisen. Der gebogene Abschnitt kann einen Biegeradius R_{AE} von zwischen etwa dem 3-fachen und etwa dem 5-fachen des Innendurchmessers des Abzweigelements im gebogenen Abschnitt aufweisen. Der Winkel α_{AE} zwischen den zwei Abzweigrohren des Abzweigelements kann zwischen etwa 20° und etwa 40°, vorzugsweise aber etwa 30° betragen.

### Bezugszeichenliste

- 1,1': Beschichtungsvorrichtung
- 2: Gehäuse
- 4: Lackbecken
- 6: Überlaufrinne
- 8: Bodenplatte Überlaufrinne
- 10: Lackgemisch-Rücklauf
- 12: Lackgemisch-Vorlauf
- 14: Einstellrahmen
- 16: Einstellschrauben
- 18: Ausnehmung
- 20: Kühlmittelraum
- 22: spiralförmiges Blech
- 24: Austrittsöffnung Kühlmittel-Vorlaufs
- 26: Kühlmittel-Vorlauf
- 28: Kühlmittel-Rücklauf
- 30: Außenhülle
- 32: Isolierraum
- 34: Tauchhülse für Temperaturfühler
- 36: Diffusor
- 38: Lösemitteldosiervorrichtung
- 40: Dosierrohr
- 42: Dosierrohr-Montageelement
- 44: Dosierrohr-Austrittsöffnung
- 46: Durchgang
- 48: Modul Pumpe und Lackgemisch-Filter
- 50: Pumpe
- 52: Lackgemisch-Filter
- 54: Pumpenbefestigungsplatte
- 56: Filterbefestigungsplatte
- 58: Profilstange
- 60: Verbindungsrohr
- 62: Pumpeneingangsrohr
- 64: Abzweigelement
- 66: Luftauslass
- ΔH: Höhendifferenz Oberkante Lackbecken und Oberkante Gehäuse
- α_{A}: Öffnungswinkel Ausnehmung
- B_{A}: Breite Ausnehmung
- H_{A}: Höhe Ausnehmung
- H_{ÜR}: Höhe Überlaufrinne
- R_{DR}: Biegeradius Dosierrohr
- α_{DR}: Biegewinkel Dosierrohr
- α_{AÖDR}: Winkel Dosierrohr-Austrittsöffnung
- D_{DRME}: Durchmesser Durchgangsloch Dosierrohr-Montageelement
- B_{DIF}: Kantenlänge Diffusor
- α_{DIF}: Winkel Leitflächen
- R_{AE}: Biegeradius Abzweigelement
- α_{AE}: Winkel Abzweigrohre

## Patentansprüche

1. Beschichtungsvorrichtung (1; 1') zur Tauchbeschichtung von Brillengläsern, umfassend:
ein Lackbecken (4) zur Aufnahme eines Lackgemisches,
eine an dem Lackbecken (4) angeordnete Überlaufrinne (6) zur Aufnahme des von dem Lackbecken (4) überlaufenden Lackgemisches,
ein Lackgemisch-Vorlauf (12) zur Zuführung des Lackgemisches in das Lackbecken (4), wobei der Lackgemisch-Vorlauf (12) an dem Lackbecken (4) angeordnet ist,
ein Lackgemisch-Rücklauf (10) zur Entnahme des Lackgemisches aus der Überlaufrinne (6), wobei der Lackgemisch-Rücklauf (10) an der Überlaufrinne (6) angeordnet ist,
eine Verbindungsleitung, welche zwischen dem Lackgemisch-Vorlauf (12) und dem Lackgemisch-Rücklauf (10) angeordnet ist und diese verbindet,
**dadurch gekennzeichnet, dass** die Beschichtungsvorrichtung (1, 1') eine Lösemitteldosiervorrichtung (38) umfasst, welche ausgelegt ist, Lösemittel direkt in die Überlaufrinne (6) zu dosieren,
wobei die Lösemitteldosiervorrichtung (38) derart konfiguriert ist, dass das von der Lösemitteldosiervorrichtung (38) austretende Lösemittel an einer Innenwand der Überlaufrinne (6) einen Lösemittelfilm ausbildet, und
wobei die Lösemitteldosiervorrichtung (38) ein Dosierrohr (40) umfasst, wobei die Austrittsöffnung (44) des Dosierrohrs gegen eine Innenwand der Überlaufrinne (6) gerichtet ist.

2. Beschichtungsvorrichtung (1; 1') nach Anspruch 1, wobei entlang einer Oberkante des Lackbeckens (4) eine Mehrzahl von Ausnehmungen (18) ausgebildet ist.

3. Beschichtungsvorrichtung (1; 1') nach Anspruch 1 oder 2, weiter umfassend:
ein Gehäuse (2), in dessen Inneren das Lackbecken und ein Kühlmittelraum (20) angeordnet sind,
wobei an dem Kühlmittelraum (20) ein Kühlmittel-Vorlauf (26) und ein Kühlmittel-Rücklauf (28) voneinander beabstandet angeordnet sind, und eine Kühlmittelführung spiralförmig um das Lackbecken (4) herum von dem Kühlmittel-Vorlauf (26) zu dem Kühlmittel-Rücklauf (28) führend ausgebildet ist.

4. Beschichtungsvorrichtung (1') nach einem der vorangegangenen Ansprüche, wobei an einer Austrittsöffnung des Lackgemisch-Vorlaufs (12) in dem Lackbecken (4) ein Diffusor (36) angeordnet ist, welcher dem austretenden Lackgemisch einen Drall um eine Längsachse der Austrittsöffnung verleiht.

5. Beschichtungsvorrichtung (1; 1') nach einem der vorangegangenen Ansprüche, wobei zwischen Abschnitten der Verbindungsleitung zur Kupplung der Abschnitte Flachdichtungen angeordnet sind.

6. Beschichtungsvorrichtung (1; 1') nach einem der vorangegangenen Ansprüche, wobei die Verbindungsleitung mit dem Lackgemisch-Vorlauf (12) und mit dem Lackgemisch-Rücklauf (10) jeweils über eine im Wesentlichen zylindrisch oder konisch ausgebildete Schlauchtülle verbunden ist, wobei die Schlauchtülle glatt ausgebildet ist.

7. Beschichtungsvorrichtung (1; 1') nach einem der vorangegangenen Ansprüche, wobei die Verbindungsleitung umfasst:
eine Pumpe (50) zum Fördern des Lackgemisches von dem Lackgemisch-Rücklauf (10) zu dem Lackgemisch-Vorlauf (12), und
einen Lackgemisch-Filter (52),
wobei die Pumpe (50) und der Lackgemisch-Filter (52) vorzugsweise über eine Festverrohrung (60) miteinander verbunden sind.

8. Beschichtungsvorrichtung (1; 1') nach einem der vorangegangenen Ansprüche, wobei der Lackgemisch-Vorlauf (12) einen ersten Lackgemisch-Vorlauf und einen zweiten Lackgemisch-Vorlauf aufweist, und die Verbindungsleitung ein Y-förmiges Abzweigelement (64) aufweist, um die Verbindungsleitung jeweils mit dem ersten und dem zweiten Lackgemisch-Vorlauf zu verbinden.

9. Verfahren zum Nachdosieren von Lack und Lösemittel in eine Beschichtungsvorrichtung (1; 1') für eine Tauchbeschichtung von Brilengläsern, umfassend:
Bereitstellen eines Lackbeckens (4) zur Aufnahme eines Lackgemisches,
Bereitstellen einer an dem Lackbecken (4) angeordneten Überlaufrinne (6) zur Aufnahme des von dem Lackbecken (4) überlaufenden Lackgemisches,
Bereitstellen eines Lackgemisch-Vorlaufs (12) zur Zuführung des Lackgemisches in das Lackbecken (4), wobei der Lackgemisch-Vorlauf (12) an dem Lackbecken (4) angeordnet ist,
Bereitstellen eines Lackgemisch-Rücklaufs (10) zur Entnahme des Lackgemisches aus der Überlaufrinne (6), wobei der Lackgemisch-Rücklauf (10) an der Überlaufrinne (6) angeordnet ist,
Bereitstellen einer Verbindungsleitung, welche zwischen dem Lackgemisch-Vorlauf (12) und dem Lackgemisch-Rücklauf (10) angeordnet ist und diese verbindet,
Bereitstellen eines Dosierrohrs (40) zum Zudosieren von Lösungsmittel in die Überlaufrinne (6)
und
Nachdosieren von Lösemittel direkt in die Überlaufrinne (6),
wobei das austretende Lösemittel an einer Innenwand der Überlaufrinne (6) einen Lösemittelfilm ausbildet, und
wobei das Austreten des Lösemittel aus dem Dosierrohr (40) gegen eine Innenwand der Überlaufrinne (6) gerichtet ist.

10. Beschichtungsvorrichtung (1; 1') zur Tauchbeschichtung von Brillengläsern, umfassend:
ein Lackbecken (4) zur Aufnahme eines Lackgemisches,
eine an dem Lackbecken (4) angeordnete Überlaufrinne (6) zur Aufnahme des von dem Lackbecken (4) überlaufenden Lackgemisches,
ein Lackgemisch-Vorlauf (12) zur Zuführung des Lackgemisches in das Lackbecken (4), wobei der Lackgemisch-Vorlauf (12) an dem Lackbecken (4) angeordnet ist,
ein Lackgemisch-Rücklauf (10) zur Entnahme des Lackgemisches aus der Überlaufrinne (6), wobei der Lackgemisch-Rücklauf (10) an der Überlaufrinne (6) angeordnet ist,
eine Verbindungsleitung, welche zwischen dem Lackgemisch-Vorlauf (12) und dem Lackgemisch-Rücklauf (10) angeordnet ist und diese verbindet,
**dadurch gekennzeichnet, dass** die Beschichtungsvorrichtung (1, 1') eine Lackdosiervorrichtung mit einem Lack-Nachfülltank umfasst,
wobei der Lack-Nachfülltank ein Zumischen von Lösemittel in den Lack-Nachfülltank erlaubt,
wobei die Lackdosiervorrichtung derart konfiguriert ist, dass das Nachdosieren eines Lack-Lösemittel-Gemisches aus dem Lack-Nachfülltank in der Überlaufrinne (6) unterhalb des Niveaus des in der Überlaufrinne befindlichen Lackgemisches erfolgt, und
wobei die Beschichtungsvorrichtung (1; 1') frei von einer Lösemitteldosiervorrichtung zur Dosierung von Lösemittel in den Lackbecken ist.

11. Verfahren zum Nachdosieren von Lack und Lösemittel in eine Beschichtungsvorrichtung (1; 1') für eine Tauchbeschichtung von Brilengläsern, umfassend:
Bereitstellen eines Lackbeckens (4) zur Aufnahme eines Lackgemisches,
Bereitstellen einer an dem Lackbecken (4) angeordneten Überlaufrinne (6) zur Aufnahme des von dem Lackbecken (4) überlaufenden Lackgemisches,
Bereitstellen eines Lackgemisch-Vorlaufs (12) zur Zuführung des Lackgemisches in das Lackbecken (4), wobei der Lackgemisch-Vorlauf (12) an dem Lackbecken (4) angeordnet ist,
Bereitstellen eines Lackgemisch-Rücklaufs (10) zur Entnahme des Lackgemisches aus der Überlaufrinne (6), wobei der Lackgemisch-Rücklauf (10) an der Überlaufrinne (6) angeordnet ist,
Bereitstellen einer Verbindungsleitung, welche zwischen dem Lackgemisch-Vorlauf (12) und dem Lackgemisch-Rücklauf (10) angeordnet ist und diese verbindet,
Bereitstellen eines Lack-Lösemittel-Gemisches in einem Lack-Nachfülltank durch Einfüllen von Lösemittel in den Lack-Nachfülltank und Vermischen des Lösemittels mit Lack im Inneren des Lack-Nachfülltanks, und
Nachdosieren des Lack-Lösemittel-Gemisches in ein Lackgemisch des Lackkreislaufs,
wobei das Nachdosieren des Lack-Lösemittel-Gemisches aus dem Lack-Nachfülltank in der Überlaufrinne (6) unterhalb des Niveaus des in der Überlaufrinne befindlichen Lackgemisches erfolgt.

12. Verfahren nach Anspruch 11, weiter umfassend:
Nachfüllen von Lösemittel in den Lack-Nachfülltank derart, dass der Feststoffgehalt des Lackgemisches des Lackkreislaufs auf einem konstanten Niveau gehalten wird.

## Claims

1. A coating device (1; 1') for dip coating of ophthalmic lenses, comprising:
a lacquer basin (4) for receiving a lacquer mixture,
an overflow channel (6) arranged at the lacquer basin (4) for receiving the lacquer mixture overflowing from the lacquer basin (4),
a paint mixture flow (12) for feeding the paint mixture into the paint tank (4), the paint mixture flow (12) being arranged at the lacquer basin (4),
a paint mixture return (10) for removing the paint mixture from the overflow channel (6), the paint mixture return (10) being arranged at the overflow channel (6),
a connecting line, which is arranged between the paint mixture flow (12) and the paint mixture return (10) and connects them,
**characterized in that** the coating device (1; 1') comprises
a solvent dosing device (38) designed to dose solvent directly into the overflow channel (6),
wherein the solvent dosing device (38) is configured such that the solvent exiting the solvent dosing device (38) forms a solvent film on an inner wall of the overflow channel (6), and
wherein the solvent dosing device (38) comprises a dosing tube (40), the outlet opening (44) of the dosing tube being directed against an inner wall of the overflow channel (6).

2. Coating device (1; 1') according to claim 1, wherein a plurality of recesses (18) are formed along an upper edge of the lacquer basin (4).

3. Coating device (1; 1') according to claim 1 or 2, further comprising:
a housing (2), inside which the paint basin and a coolant chamber (20) are arranged,
wherein a coolant supply (26) and a coolant return (28) are arranged at the coolant chamber (20) at a distance from one another, and a coolant guide is formed spirally around the paint tank (4) from the coolant supply (26) to the coolant return (28).

4. Coating device (1') according to one of the preceding claims, a diffuser (36) being arranged at an outlet opening of the paint mixture flow (12) in the lacquer basin (4), wherein the diffuser (36) imparts a twist to the emerging paint mixture about a longitudinal axis of the outlet opening.

5. Coating device (1; 1') according to one of the preceding claims, with flat gaskets being arranged between sections of the connecting pipe for coupling the sections.

6. Coating device (1; 1') according to one of the preceding claims, the connecting line being connected to the paint mixture flow (12) and to the paint mixture return (10) in each case via a hose nozzle of substantially cylindrical or conical design, the hose nozzle being smooth.

7. Coating device (1; 1') according to one of the preceding claims, the connecting line comprising:
a pump (50) for conveying the paint mixture from the paint mixture return (10) to the paint mixture flow (12), and
a paint mixture filter (52), wherein the pump (50) and the paint mixture filter (52) are preferably connected to each other via a fixed pipe system (60).

8. Coating device (1; 1') according to one of the preceding claims, wherein the paint mixture flow (12) comprises a first paint mixture flow and a second paint mixture flow, and the connecting line comprises a Y-shaped branching element (64) to connect the connecting line to the first and the second paint mixture flow respectively.

9. A method for replenishing a coating apparatus (1; 1') for dip coating of spectacle glasses with lacquer and solvent, comprising:
Provision of a lacquer basin (4) for receiving a lacquer mixture,
Provision of an overflow channel (6) arranged at the lacquer basin (4) to receive the lacquer mixture overflowing from the lacquer basin (4),
Provision of a paint mixture flow (12) for feeding the paint mixture into the lacquer basin (4), whereby the paint mixture flow (12) is arranged at the lacquer basin (4),
Provision of a paint mixture return flow (10) for removing the paint mixture from the overflow channel (6), the paint mixture return flow (10) being arranged at the overflow channel (6),
Provide a connecting line, which is arranged between the paint mixture flow (12) and the paint mixture return (10) and connects them,
Provision of a dosing pipe (40) for dosing solvent into the overflow channel (6)
and
Subsequent dosing of solvent directly into the overflow channel (6),
wherein the escaping solvent forms a solvent film on an inner wall of the overflow channel (6), and
whereby the solvent discharge from the dosing tube (40) is directed against an inner wall of the overflow channel (6).

10. A coating device (1; 1') for dip coating of ophthalmic lenses, comprising:
a lacquer basin (4) for receiving a lacquer mixture,
a paint mixture flow (12) for feeding the paint mixture into the paint tank (4), the paint mixture flow (12) being arranged at the lacquer basin (4),
a paint mixture return (10) for removing the paint mixture from the overflow channel (6), the paint mixture return (10) being arranged at the overflow channel (6),
a connecting line, which is arranged between the paint mixture flow (12) and the paint mixture return (10) and connects them,
**characterized in that** the coating device (1; 1') comprises a paint dosing device with a paint refill tank,
wherein the coating refill tank allows solvent to be added to the coating refill tank,
wherein the paint dosing device is configured in such a way that the re-dosing of a paint/solvent mixture from the paint refill tank takes place in the overflow channel (6) below the level of the paint mixture located in the overflow channel, and
wherein the coating device (1;1') is free from a solvent dosing device for dosing solvent in the paint tanks.

11. Method for the subsequent dosing of lacquer and solvent into a coating device (1; 1') for dip coating of spectacle glasses, comprising:
Provision of a lacquer basin (4) for receiving a lacquer mixture,
Provision of an overflow channel (6) arranged at the lacquer basin (4) to receive the lacquer mixture overflowing from the lacquer basin (4),
Provision of a paint mixture flow (12) for feeding the paint mixture into the lacquer basin (4), whereby the paint mixture flow (12) is arranged at the lacquer basin (4),
Provision of a paint mixture return flow (10) for removing the paint mixture from the overflow channel (6), the paint mixture return flow (10) being arranged at the overflow channel (6),
Provision of a connecting line, which is arranged between the paint mixture flow (12) and the paint mixture return (10) and connects them,
Provision of a coating-solvent mixture in a coating refill tank by filling solvent into the coating refill tank and mixing the solvent with coating inside the coating refill tank, and
Subsequent metering of the coating-solvent mixture into a coating mixture of the coating circuit,
wherein the replenishment of the paint/solvent mixture from the paint refill tank is carried out in the overflow channel (6) below the level of the paint mixture in the overflow channel.

12. Method according to claim 11, further comprising:
Refilling of solvent into the paint refill tank in such a way that the solids content of the paint mixture of the paint circuit is kept at a constant level.

## Revendications

1. Un dispositif de revêtement (1; 1') pour le revêtement par trempage des lentilles ophtalmiques, comprenant :
un bassin de laque (4) pour recevoir un mélange de laque,
un canal de débordement (6) disposé sur le bassin de laque (4) pour recevoir le mélange de laque débordant du bassin de laque (4),
une alimentation en mélange de laque (12) pour alimenter le mélange de laque dans le bassin de laque (4), l'alimentation en mélange de laque (12) étant disposée au niveau du bassin de laque (4),
un retour de mélange de laque (10) pour retirer le mélange de laque du canal de débordement (6), le retour de mélange de laque (10) étant disposé sur le canal de débordement (6),
une conduite de raccordement, qui est disposée entre le départ du mélange de laque (12) et le retour du mélange de laque (10) et qui les relie,
**caractérisé en ce que** le dispositif de revêtement (1; 1') comprend un dispositif de dosage de solvant (38) qui est conçu pour doser le solvant directement dans le canal de débordement (6),
dans lequel le dispositif de dosage de solvant (38) est configuré de telle sorte que le solvant sortant du dispositif de dosage de solvant (38) forme un film de solvant sur une paroi intérieure du canal de débordement (6), et
dans lequel le dispositif de dosage de solvant (38) comprend un tube de dosage (40), l'ouverture de sortie (44) du tube de dosage étant dirigée contre une paroi intérieure du canal de débordement (6).

2. Dispositif de revêtement (1; 1') selon la revendication 1, dans lequel une pluralité d'évidements (18) sont formés le long d'un bord supérieur du bassin de laque (4).

3. Dispositif de revêtement (1; 1') selon la revendication 1 ou 2, comprenant en outre :
un boîtier (2), à l'intérieur duquel sont disposés le bassin de laque et un espace de refroidissement (20),
dans lequel une alimentation en liquide de refroidissement (26) et un retour de liquide de refroidissement (28) sont disposés au niveau de la chambre de refroidissement (20) à une certaine distance l'un de l'autre, et un guide de liquide de refroidissement est formé en spirale autour du bassin de laque (4) depuis l'alimentation en liquide de refroidissement (26) jusqu'au retour de liquide de refroidissement (28).

4. Dispositif de revêtement (1') selon l'une des revendications précédentes, dans lequel un diffuseur (36) est disposé à une ouverture de sortie du flux de mélange de laque (12) dans le bassin de laque (4), dans lequel le diffuseur (36) confère une torsion au mélange de laque sortant autour d'un axe longitudinal de l'ouverture de sortie.

5. Dispositif de revêtement (1; 1') selon l'une des revendications précédentes, des joints plats étant disposés entre les sections de la conduite de raccordement pour l'accouplement des sections.

6. Dispositif de revêtement (1; 1') selon l'une des revendications précédentes, la conduite de raccordement étant reliée à l'arrivée (12) et au retour (10) du mélange de laque, dans chaque cas par l'intermédiaire d'une buse de tuyau de conception sensiblement cylindrique ou conique, la buse de tuyau étant lisse.

7. Dispositif de revêtement (1 ; 1') selon l'une des revendications précédentes, la conduite de raccordement comprenant :
une pompe (50) pour transporter le mélange de laque du retour du mélange de laque (10) au flux du mélange de laque (12), et
un filtre pour mélange de laque (12),
dans lequel la pompe (50) et le filtre de mélange de laque (52) sont de préférence reliés entre eux par un tuyau fixe (60).

8. Dispositif de revêtement (1; 1') selon l'une des revendications précédentes, le flux de mélange de laque (12) ayant un premier flux de mélange de laque et un deuxième flux de mélange de laque, et la ligne de raccordement ayant un élément de dérivation en forme de Y (64) afin de relier la ligne de raccordement au premier et au deuxième flux de mélange de laque respectivement.

9. Méthode de post-dosage de la laque et du solvant dans un appareil de revêtement (1; 1') pour le revêtement par immersion de verres de lunettes, comprenant:
mise à disposition d'un bassin de laque (4) pour recevoir un mélange de laque,
mise à disposition d'un canal de débordement (6) disposé sur le bassin de laque (4) pour recevoir le mélange de laque débordant du bassin de laque (4),
mise à disposition d'une alimentation en mélange de laque (12) pour l'alimentation du mélange de laque dans le bassin de laque (4), l'alimentation en mélange de laque (12) étant disposée sur le bassin de laque (4),
mise à disposition d'un retour de mélange de laque (10) pour retirer le mélange de laque du canal de débordement (6), le retour de mélange de laque (10) étant disposé au niveau du canal de débordement (6),
prévoir une ligne de raccordement, qui est disposée entre le départ du mélange de laque (12) et le retour du mélange de laque (10) et qui les relie,
mise à disposition d'un tuyau de dosage (40) pour le dosage du solvant dans le canal de trop-plein (6)
et dosage ultérieur du solvant directement dans le canal de débordement (6),
le solvant qui s'échappe forme un film de solvant sur une paroi intérieure du canal de débordement (6), et
où la décharge du solvant du tube de dosage (40) est dirigée contre une paroi intérieure du canal de débordement (6).

10. Un appareil de revêtement (1 ; 1') pour le revêtement par trempage des lentilles ophtalmiques, comprenant :
un bassin de laque (4) pour recevoir un mélange de laque, et
une alimentation en mélange de laque (12) pour alimenter le mélange de laque dans le bassin de laque (4), l'alimentation en mélange de laque (12) étant disposée au niveau du bassin de laque (4),
un retour de mélange de laque (10) pour retirer le mélange de laque du canal de débordement (6), le retour de mélange de laque (10) étant disposé sur le canal de débordement (6),
une conduite de raccordement, qui est disposée entre le départ du mélange de laque (12) et le retour du mélange de laque (10) et qui les relie,
**caractérisé en ce que** le dispositif de revêtement (1; 1') comprend un dispositif de dosage de laque avec un réservoir de remplissage de laque,
par lequel le réservoir de recharge de laque permet l'ajout de solvant dans le réservoir de recharge de laque,
dans lequel le dispositif de dosage de la laque est configuré de telle sorte que le dosage ultérieur d'un mélange laque/solvant provenant du réservoir de remplissage de la laque a lieu dans le canal de trop-plein (6) en dessous du niveau du mélange de laque situé dans le canal de trop-plein, et
dans lequel le dispositif de revêtement (1; 1') est dépourvu de dispositif de dosage de solvant pour doser le solvant dans les réservoirs de laque.

11. Procédé pour le dosage ultérieur de la laque et du solvant dans un dispositif de revêtement (1; 1') pour le revêtement par immersion de verres de lunettes, comprenant :
mise à disposition d'un bassin de laque (4) pour recevoir un mélange de laque,
mise à disposition d'un canal de débordement (6) disposé sur le bassin de laque (4) pour recevoir le mélange de laque débordant du bassin de laque (4),
mise à disposition d'une alimentation en mélange de laque (12) pour l'alimentation du mélange de laque dans le bassin de laque (4), l'alimentation en mélange de laque (12) étant disposée sur le bassin de laque (4),
mise à disposition d'un retour de mélange de laque (10) pour retirer le mélange de laque du canal de débordement (6), le retour de mélange de laque (10) étant disposé au niveau du canal de débordement (6),
prévoir une conduite de raccordement, qui est disposée entre le départ du mélange de laque (12) et le retour du mélange de laque (10) et qui les relie,
fournir un mélange laque/solvant dans un réservoir de recharge de laque en chargeant le solvant dans le réservoir de recharge de laque et en mélangeant le solvant avec la laque à l'intérieur du réservoir de recharge de laque, et
dosage ultérieur du mélange laque/solvant dans un mélange de laque du circuit de laque,
le post-dosage du mélange laque/solvant du réservoir de recharge de la laque dans le canal de trop-plein (6) se fait en dessous du niveau du mélange de laque dans le canal de trop-plein.

12. Procédé selon la revendication 11, comprenant en outre
remplissage du solvant dans le réservoir de recharge de la laque de telle sorte que la teneur en solides du mélange de laque du circuit de la laque soit maintenue à un niveau constant.
